# EUROPEAN PATENT APPLICATION

(11) **EP 4 757 402 A1**
(43) Date of publication of application: **10.06.2026**
(21) Application number: 24858324.7
(22) Date of filing: 15.08.2024
(51) Int. Cl.: H04W 24/10

(54) **RESOURCE CONFIGURATION METHOD AND COMMUNICATION APPARATUS**

(30) Priority: 30.08.2023 CN 202311112342
(71) Applicant: HUAWEI TECHNOLOGIES CO., LTD., Shenzhen, Guangdong 518129 (CN)
(72) Inventor: YUAN, Yiling, Shenzhen, Guangdong 518129 (CN); GAO, Junhui, Shenzhen, Guangdong 518129 (CN); WANG, Xiaohan, Shenzhen, Guangdong 518129 (CN); JIN, Huangping, Shenzhen, Guangdong 518129 (CN); DING, Mengying, Shenzhen, Guangdong 518129 (CN)
(74) Representative: Goddar, Heinz J.
(86) International application number: PCT/CN2024/112353
(87) International publication number: WO 2025/044781

(57) **Abstract**

This application provides a resource configuration method. The method includes: A terminal device receives a channel state information CSI reporting configuration from a network device, where the CSI reporting configuration includes N fields, the N fields are in one-to-one correspondence with N CSI resource configurations, a first field in the N fields indicates a first carrier associated with a first CSI resource configuration that is in the N CSI resource configurations and that corresponds to the first field, the N CSI resource configurations are associated with N carriers, and N is a positive integer greater than 1; the terminal device obtains CSI based on the CSI reporting configuration; and the terminal device sends the CSI to the network device. The terminal device performs channel measurement on the N carriers based on the N fields in the CSI reporting configuration, to obtain the CSI, and sends the CSI to the network device, so that the terminal device performs channel measurement on the N carriers, and feeds back, in the CSI to the network device, measurement results corresponding to the N carriers.

## Description

This application claims priority to Chinese Patent Application No. 202311112342.8, filed with the China National Intellectual Property Administration on August 30, 2023 and entitled "RESOURCE CONFIGURATION METHOD AND COMMUNICATION APPARATUS", which is incorporated herein by reference in its entirety.

### TECHNICAL FIELD

Embodiments of this application relate to the field of wireless communication technologies, and more specifically, to a resource configuration method and a communication apparatus.

### BACKGROUND

With development of communication technologies and emergence of various new services (for example, extended reality (extended reality, XR)), a requirement of a terminal device for a cell capacity greatly increases. To increase the cell capacity, increasing a bandwidth becomes an effective technical means. In an actual application scenario, if the bandwidth is increased to increase the cell capacity, there may be carriers in a plurality of discrete frequency bands. In a case of discrete carriers, a carrier aggregation (carrier aggregation, CA) technology is usually used to aggregate a plurality of discrete carriers for transmission, to increase the cell capacity.

In a CA scenario, when there are a plurality of frequency division duplex (frequency division duplex, FDD) frequency bands or a plurality of time division duplex (time division duplex, TDD) frequency bands without uplink measurement pilots in frequency bands obtained through aggregation, a network device usually sends a reference signal (reference signal, RS) (for example, a channel state information reference signal (channel state information reference signal, CSI-RS)) to the terminal device, where the RS is used by the terminal device to perform channel measurement on a downlink channel. The terminal device measures the downlink channel based on the RS and a CSI resource configuration, and reports CSI as a measurement result to the network device. The network device sends downlink data based on the CSI reported by the terminal device.

Currently, in the CA scenario, carrier aggregation is performed in frequency bands to increase the cell capacity. The terminal device needs to measure channels corresponding to a plurality of carriers, to support multi-band transmission of data. Therefore, how the terminal device performs multi-band joint channel measurement is currently hot research content.

### SUMMARY

This application provides a resource configuration method and a communication apparatus. In a CA scenario, a terminal device can determine N CSI resource configurations based on N fields in a CSI reporting configuration, obtain CSI based on the N CSI resource configurations, and report the CSI to a network device. The CSI corresponds to N carriers. In this way, the terminal device performs joint measurement on the N carriers.

According to a first aspect, a resource configuration method is provided. The method may be performed by a terminal device, or may be performed by a component (for example, a chip or a circuit) of the terminal device. This is not limited herein.

The method includes: The terminal device receives a channel state information CSI reporting configuration from a network device, where the CSI reporting configuration includes N fields, the N fields are in one-to-one correspondence with N CSI resource configurations, a first field in the N fields indicates a first carrier associated with a first CSI resource configuration that is in the N CSI resource configurations and that corresponds to the first field, the N CSI resource configurations are associated with N carriers, and N is a positive integer greater than 1; the terminal device obtains channel state information CSI based on the CSI reporting configuration; and the terminal device sends the CSI to the network device.

It should be understood that the CSI reporting configuration includes the N fields. The N fields may be N independent fields, or the N fields may be a group of fields, and the group of fields includes N fields.

It should be understood that the terminal device obtains the CSI based on the N CSI resource configurations. The CSI is CSI corresponding to the N carriers. To be specific, the terminal device performs channel measurement (also referred to as joint channel measurement) on the N carriers based on the N CSI resource configurations, to obtain the CSI.

According to the method provided in this application, the terminal device receives the CSI reporting configuration, where the CSI reporting configuration includes the N fields, and the N fields indicate the N CSI resource configurations. In this application, the N fields are added to the CSI reporting configuration, to indicate the N CSI resource configurations associated with the N carriers. This can implement good compatibility with an existing standard. In other words, a CSI reporting configuration in the existing standard does not need to be greatly changed, and the terminal device performs joint channel measurement on the N carriers only by adding the N fields.

With reference to the first aspect, in some possible implementations, that the CSI reporting configuration includes the N fields includes: The CSI reporting configuration further includes N CSI reporting sub-configurations, the N CSI reporting sub-configurations include the N fields, and the N fields are in one-to-one correspondence with the N CSI reporting sub-configurations.

It should be understood that, that the CSI reporting configuration includes the N fields may be understood as follows: The CSI reporting configuration directly includes related information of the N fields, or the CSI reporting configuration includes the N CSI reporting sub-configurations, the N CSI reporting sub-configurations include the N fields, and the N fields are in one-to-one correspondence with the N CSI reporting sub-configurations. A first CSI reporting sub-configuration in the N CSI reporting sub-configurations includes the first field. The first field indicates a first carrier corresponding to the first CSI reporting sub-configuration, and the first carrier is associated with the first CSI resource configuration.

Based on the foregoing technical solution, the N fields are added to the N CSI reporting sub-configurations in the CSI reporting configuration, the N fields are in one-to-one correspondence with the N CSI reporting sub-configurations, the N CSI reporting sub-configurations are in one-to-one correspondence with the N CSI resource configurations, and the N CSI resource configurations are associated with the N carriers. In other words, the terminal device may determine the N fields based on the N reporting sub-configurations in the CSI reporting configuration, and perform, by using the N CSI resource configurations corresponding to the N fields, channel measurement on the N carriers associated with the N CSI resource configurations, so that the terminal device performs joint channel measurement on the N carriers.

With reference to the first aspect, in some implementations of the first aspect, the CSI reporting configuration includes at least one CSI measurement resource group, the at least one CSI measurement resource group includes M CSI measurement resources, the M CSI measurement resources correspond to the N CSI resource configurations, and M is a positive integer greater than or equal to N. That the terminal device obtains the CSI based on the CSI reporting configuration includes: The terminal device determines, based on the at least one CSI measurement resource group, the M CSI measurement resources corresponding to the N CSI resource configurations; and the terminal device obtains the CSI based on the M CSI measurement resources.

It should be understood that the CSI reporting configuration includes the at least one CSI measurement resource group, and the at least one CSI measurement resource group includes the M CSI measurement resources. The N CSI resource configurations correspond to the M CSI measurement resources, where M≥N. When the terminal device obtains the CSI based on the N CSI resource configurations, the terminal device performs channel measurement on the N carriers based on the M CSI measurement resources corresponding to the N CSI resource configurations, and obtains the CSI.

With reference to the first aspect, in some possible implementations, the CSI reporting configuration includes the N CSI reporting sub-configurations, and the N CSI reporting sub-configurations are in one-to-one correspondence with the N CSI resource configurations. That the terminal device obtains the channel state information CSI based on the CSI reporting configuration includes: The terminal device determines the N CSI resource configurations based on the N CSI reporting sub-configurations; and
the terminal device obtains the CSI based on the N CSI resource configurations.

With reference to the first aspect, in some possible implementations, that the terminal device obtains the CSI based on the CSI reporting configuration includes:

The terminal device obtains the CSI based on the M CSI measurement resources, where an interval between the M CSI measurement resources on a time domain resource is less than or equal to a first threshold, the first threshold is a positive integer, the M CSI measurement resources correspond to the N CSI resource configurations, and M is a positive integer greater than or equal to N.

It should be understood that, when channel measurement is performed on the N carriers, the interval between the used M CSI measurement resources on the time domain resource is less than or equal to the first threshold. The first threshold is predefined, preconfigured, or indicated by the network device. This is not specifically limited in this application.

With reference to the first aspect, in some possible implementations, before that the terminal device receives the CSI reporting configuration from the network device, the method further includes: The terminal device sends joint channel measurement capability information to the network device, where the joint channel measurement capability information is used by the network device to determine the CSI reporting configuration, and the joint channel measurement capability information includes one or more of the following:
a maximum value of a quantity of carriers that is supported by the terminal device for joint channel measurement, information about a band combination supported by the terminal device for joint channel measurement, a maximum total bandwidth supported by the terminal device for joint channel measurement, and a maximum quantity of ports that is supported by the terminal device for joint channel measurement.

It should be understood that before the network device sends the CSI reporting configuration to the terminal device, the terminal device sends the joint channel measurement capability indication information to the network device, and the network device further determines the CSI reporting configuration based on the joint channel measurement capability information of the terminal device, so that the terminal device performs channel measurement on a plurality of carriers.

With reference to the first aspect, in some possible implementations, that the terminal device obtains the CSI based on the CSI reporting configuration includes: The terminal device determines, based on first signaling, a sub-band granularity for channel measurement, where the first signaling indicates the terminal device to determine, based on a total bandwidth of the N carriers, the sub-band granularity for channel measurement; and the terminal device obtains the CSI based on the sub-band granularity and the N CSI resource configurations.

Optionally, the total bandwidth of the N carriers may be a sum of bandwidths of N bandwidth parts (bandwidth parts, BWPs) corresponding to the N carriers. It should be understood that the first signaling may be predefined by the terminal device, preconfigured, or indicated by the network device. This is not specifically limited in this application.

It should be understood that, when the terminal device performs joint measurement on the N carriers, the sub-band granularity for channel measurement that is determined based on the first signaling is determined based on the total bandwidth of the N carriers, instead of determining a sub-band granularity for channel measurement based on a bandwidth of each carrier, and then combining sub-band granularities of the N carriers. It can be learned that, in this application, complexity of a joint channel measurement process of the terminal device can be reduced.

According to a second aspect, a communication apparatus is provided. A transceiver unit is configured to receive a channel state information CSI reporting configuration from a network device, where the CSI reporting configuration includes N fields, the N fields are in one-to-one correspondence with N CSI resource configurations, a first field in the N fields indicates a first carrier associated with a first CSI resource configuration corresponding to the first field, the N CSI resource configurations are associated with N carriers, and N is a positive integer greater than 1. A processing unit is configured to obtain channel state information CSI based on the N CSI resource configurations. The transceiver unit is further configured to send the CSI to the network device.

With reference to the second aspect, in some implementations of the first aspect, the CSI reporting configuration includes N CSI reporting sub-configurations, the N CSI reporting sub-configurations include the N fields, and the N fields are in one-to-one correspondence with the N CSI reporting sub-configurations.

With reference to the second aspect, in some implementations of the first aspect, the CSI reporting configuration includes at least one CSI measurement resource group, the at least one CSI measurement resource group includes M CSI measurement resources, the M CSI measurement resources correspond to the N CSI resource configurations, and M is a positive integer greater than or equal to N. The processing unit is further configured to determine, based on the at least one CSI measurement resource group, the M CSI measurement resources corresponding to the N CSI resource configurations. The processing unit is further configured to obtain the CSI based on the M CSI measurement resources.

With reference to the second aspect, in some implementations of the first aspect, the CSI reporting configuration includes the N CSI reporting sub-configurations, the N CSI reporting sub-configurations are in one-to-one correspondence with the N CSI resource configurations. The processing unit is further configured to determine the N CSI resource configurations based on the N CSI reporting sub-configurations. The processing unit is further configured to obtain the CSI based on the N CSI resource configurations.

With reference to the second aspect, in some implementations of the first aspect, the processing unit is further configured to obtain the CSI based on the M CSI measurement resources, where an interval between the M CSI measurement resources on a time domain resource is less than or equal to a first threshold, the first threshold is a positive integer, the M CSI measurement resources are associated with the N CSI resource configurations, and M is a positive integer greater than or equal to N.

With reference to the second aspect, in some implementations of the first aspect, before the transceiver unit is configured to receive the CSI reporting configuration from the network device, the method further includes: the transceiver unit is further configured to send joint channel measurement capability information to the network device, where the joint channel measurement capability information is used by the network device to determine the CSI reporting configuration, and the joint channel measurement capability information includes one or more of the following: a maximum value of a quantity of carriers that is supported by the terminal device for joint channel measurement, information about a band combination supported by the terminal device for joint channel measurement, a maximum total bandwidth supported by the terminal device for joint channel measurement, and a maximum quantity of ports that is supported by the terminal device for joint channel measurement.

With reference to the second aspect, in some implementations of the first aspect, the processing unit is further configured to determine, based on first signaling, a sub-band granularity for channel measurement, where the first signaling indicates the terminal device to determine, based on a total bandwidth of the N carriers, the sub-band granularity for channel measurement. The processing unit is further configured to obtain the CSI based on the sub-band granularity and the N CSI resource configurations.

Optionally, the total bandwidth of the N carriers may be a sum of bandwidths of N BWPs corresponding to the N carriers.

According to a third aspect, a resource configuration method is provided. The method may be performed by a network device, or may be performed by a component (for example, a chip or a circuit) of the network device. This is not limited herein.

The method includes: The network device sends a channel state information CSI reporting configuration to a terminal device, where the CSI reporting configuration includes N fields, the N fields are in one-to-one correspondence with N CSI resource configurations, a first field in the N fields indicates a first carrier associated with a first CSI resource configuration that is in the N CSI resource configurations and that corresponds to the first field, the N CSI resource configurations are associated with N carriers, and N is a positive integer greater than 1; and the network device receives channel state information CSI from the terminal device, where the CSI is obtained based on the CSI reporting configuration.

With reference to the third aspect, in some possible implementations, that the CSI reporting configuration includes the N fields includes: The CSI reporting configuration includes N CSI reporting sub-configurations, the N CSI reporting sub-configurations include the N fields, and the N fields are in one-to-one correspondence with the N CSI reporting sub-configurations.

With reference to the third aspect, in some possible implementations, the CSI reporting configuration includes at least one CSI measurement resource group, the at least one CSI measurement resource group includes M CSI measurement resources, the M CSI measurement resources correspond to the N CSI resource configurations, and M is a positive integer greater than or equal to N. That the CSI is obtained based on the CSI reporting configuration includes:

The CSI is obtained based on the M CSI measurement resources, the M CSI measurement resources correspond to the N CSI resource configurations, and the N CSI resource configurations are determined based on the at least one CSI measurement resource group.

With reference to the third aspect, in some possible implementations, the CSI reporting configuration includes the N CSI reporting sub-configurations, and the N CSI reporting sub-configurations are in one-to-one correspondence with the N CSI resource configurations. That the CSI is obtained based on the CSI reporting configuration includes:
The CSI is obtained based on the N CSI resource configurations, and the N CSI resource configurations are determined based on the N CSI reporting sub-configurations.

With reference to the third aspect, in some possible implementations, that the CSI is obtained based on the CSI reporting configuration includes: The CSI is obtained based on the M CSI measurement resources, where an interval between the M CSI measurement resources on a time domain resource is less than or equal to a first threshold, the first threshold is a positive integer, the M CSI measurement resources are associated with the N CSI resource configurations, and M is a positive integer greater than or equal to N.

With reference to the third aspect, in some possible implementations, before that the network device sends the CSI reporting configuration to the terminal device, the method further includes: The network device receives joint channel measurement capability information from the terminal device, where the joint channel measurement capability information is used by the network device to determine the CSI reporting configuration, and the joint channel measurement capability information includes one or more of the following: a maximum value of a quantity of carriers that is supported by the terminal device for joint channel measurement, information about a band combination supported by the terminal device for joint channel measurement, a maximum total bandwidth supported by the terminal device for joint channel measurement, and a maximum quantity of ports that is supported by the terminal device for joint channel measurement.

With reference to the third aspect, in some possible implementations, the method further includes: The network device sends first signaling to the terminal device, where the first signaling indicates the terminal device to determine, based on a total bandwidth of the N carriers, a sub-band granularity for channel measurement, where the CSI is obtained based on the sub-band granularity and the N CSI resource configurations.

According to a fourth aspect, a communication apparatus is provided. The apparatus includes: a transceiver unit, configured to send a channel state information CSI reporting configuration to a terminal device, where the CSI reporting configuration includes N fields, the N fields are in one-to-one correspondence with N CSI resource configurations, a first field in the N fields indicates a first carrier associated with a first CSI resource configuration that is in the N CSI resource configurations and that corresponds to the first field, the N CSI resource configurations are associated with N carriers, and N is a positive integer greater than 1. The transceiver unit is further configured to receive channel state information CSI from the terminal device, where the CSI is obtained based on the CSI reporting configuration.

With reference to the fourth aspect, in some possible implementations, that the CSI reporting configuration includes the N fields includes: The CSI reporting configuration includes N CSI reporting sub-configurations, the N CSI reporting sub-configurations include the N fields, and the N fields are in one-to-one correspondence with the N CSI reporting sub-configurations.

With reference to the fourth aspect, in some possible implementations, the CSI reporting configuration includes at least one CSI measurement resource group, the at least one CSI measurement resource group includes M CSI measurement resources, the M CSI measurement resources correspond to the N CSI resource configurations, and M is a positive integer greater than or equal to N. The CSI is obtained based on the M CSI measurement resources, the M CSI measurement resources correspond to the N CSI resource configurations, and the N CSI resource configurations are determined based on the at least one CSI measurement resource group.

With reference to the fourth aspect, in some possible implementations, the CSI reporting configuration includes the N CSI reporting sub-configurations, and the N CSI reporting sub-configurations are in one-to-one correspondence with the N CSI resource configurations. The CSI is obtained based on the N CSI resource configurations, and the N CSI resource configurations are determined based on the N CSI reporting sub-configurations.

With reference to the fourth aspect, in some possible implementations, the CSI is obtained based on the M CSI measurement resources, where an interval between the M CSI measurement resources on a time domain resource is less than or equal to a first threshold, the first threshold is a positive integer, the M CSI measurement resources are associated with the N CSI resource configurations, and M is a positive integer greater than or equal to N.

With reference to the fourth aspect, in some possible implementations, before the transceiver unit is configured to send the CSI reporting configuration to the terminal device, the transceiver unit is further configured to receive joint channel measurement capability information from the terminal device, where the joint channel measurement capability information is used by the network device to determine the CSI reporting configuration, and the joint channel measurement capability information includes one or more of the following:
a maximum value of a quantity of carriers that is supported by the terminal device for joint channel measurement, information about a band combination supported by the terminal device for joint channel measurement, a maximum total bandwidth supported by the terminal device for joint channel measurement, and a maximum quantity of ports that is supported by the terminal device for joint channel measurement.

With reference to the fourth aspect, in some possible implementations, the transceiver unit is further configured to send first signaling to the terminal device, where the first signaling indicates the terminal device to determine, based on a total bandwidth of the N carriers, a sub-band granularity for channel measurement, where the CSI is obtained based on the sub-band granularity and the N CSI resource configurations.

According to a fifth aspect, a communication apparatus is provided. The apparatus includes a processor, configured to execute a program. When the program is executed, the processor is configured to perform the methods according to the foregoing aspects.

In a possible implementation, the communication apparatus further includes a memory, and the memory is configured to store the program.

According to a sixth aspect, this application provides a processor, configured to perform the methods according to the foregoing aspects. In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the information, the processor outputs the information to a transceiver, so that the transceiver transmits the information. After the information is outputted by the processor, other processing may further need to be performed on the information before the information arrives at the transceiver. Similarly, when the processor receives the inputted information, the transceiver obtains/receives the information, and inputs the information into the processor. Furthermore, after the transceiver receives the information, other processing may need to be performed on the information before the information is inputted into the processor.

According to the foregoing principle, for example, receiving a request message as mentioned in the foregoing methods may be understood as receiving inputted information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna. In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a seventh aspect, a computer-readable storage medium is provided. The computer-readable medium stores program code executed by a device, and the program code is used to perform the methods according to the foregoing aspects.

According to an eighth aspect, a computer program product including instructions is provided. When the computer program product runs on a computer, the computer is caused to perform the methods according to the foregoing aspects.

According to a ninth aspect, a chip is provided. The chip includes a processor and a communication interface, and the processor reads, through the communication interface, instructions stored in a memory, to perform the methods according to the foregoing aspects.

Optionally, in an implementation, the chip may further include a memory. The memory stores instructions. The processor is configured to execute the instructions stored in the memory, and when the instructions are executed, the processor is configured to perform the methods according to the foregoing aspects.

### BRIEF DESCRIPTION OF DRAWINGS

FIG. 1 is a diagram of a communication system 100 to which a method according to an embodiment of this application is applicable;
FIG. 2 is a diagram of a basic procedure of a network device obtaining CSI of a downlink channel;
FIG. 3 is a diagram of an actual quantity of times of repeated sending by a terminal device being less than a quantity of times of repeated sending that is configured by a network device;
FIG. 4 is a schematic flowchart of a resource configuration method according to this application;
FIG. 5 is a block diagram of a communication apparatus according to an embodiment of this application;
FIG. 6 is a block diagram of another communication apparatus according to an embodiment of this application; and
FIG. 7 is a block diagram of a chip system according to an embodiment of this application.

### DESCRIPTION OF EMBODIMENTS

The following describes technical solutions of this application with reference to the accompanying drawings.

The technical solutions provided in this application may be applied to various communication systems, for example, a long term evolution (Long Term Evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th Generation (5th Generation, 5G) mobile communication system, a new radio access technology (new radio access technology, NR), or a future communication system, for example, a 6th generation (6th generation, 6G) communication system. The 5G mobile communication system may include non-standalone (non-standalone, NSA) networking and/or standalone (standalone, SA) networking.

The technical solutions provided in this application may be further applied to machine type communication (machine type communication, MTC), long term evolution-machine (Long Term Evolution-machine, LTE-M), and a device-to-device (device-to-device, D2D) network, a machine to machine (machine to machine, M2M) network, an internet of things (internet of things, IoT) network, or other networks. The IoT network may include, for example, an internet of vehicles. Communication modes in an internet of vehicles system are collectively referred to as vehicle to X (vehicle to X, V2X, where X can stand for everything). For example, the V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

The technical solutions provided in this application may be further applied to a future communication system, for example, a 6th generation mobile communication system. This is not limited in this application.

In embodiments of this application, a network device may be any device having a wireless transceiver function. The device includes, but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system, or may be a gNB in a 5G system, for example, an NR system, or a transmission point (TRP or TP), or one antenna panel or one group of antenna panels (including a plurality of antenna panels) of a base station in a 5G system, or may be a network node that forms a gNB or a transmission point, for example, a baseband unit (BBU) or a distributed unit (distributed unit, DU).

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing non-real-time protocols and services, to implement functions of a radio resource control (radio resource control, RRC) layer, a service data adaptation protocol (service data adaptation protocol, SDAP) function, and a packet data convergence protocol (packet data convergence protocol, PDCP) layer. The DU is responsible for processing a physical layer protocol and a real-time service, to implement functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device provides a service for a cell, and a terminal device uses a transmission resource allocated by the network device (for example, a frequency domain resource, or a spectrum resource) to communicate with the cell. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), or the like. These small cells have characteristics of small coverage and low transmit power, and are applicable to providing a highspeed data transmission service.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a user with voice/data connectivity, for example, a handheld device or a vehicle-mounted device that has a wireless connection function. Currently, some examples of the terminal may be: a mobile phone (mobile phone), a tablet computer (pad), a computer having wireless receiving and sending functions (for example, a notebook computer or a palmtop computer), a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, and a terminal device in a future evolved public land mobile network (public land mobile network, PLMN).

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device may alternatively be a terminal device in an internet of things (internet of things, IoT) system. An IoT is an important part in future development of information technologies. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrow band (narrow band, NB) technology.

In addition, the terminal device may further include a sensor, for example, an intelligent printer, a train detector, or a gas station. Main functions of the terminal device include collecting data (some terminal devices), receiving control information and downlink data from the network device, sending an electromagnetic wave, and transmitting uplink data to the network device.

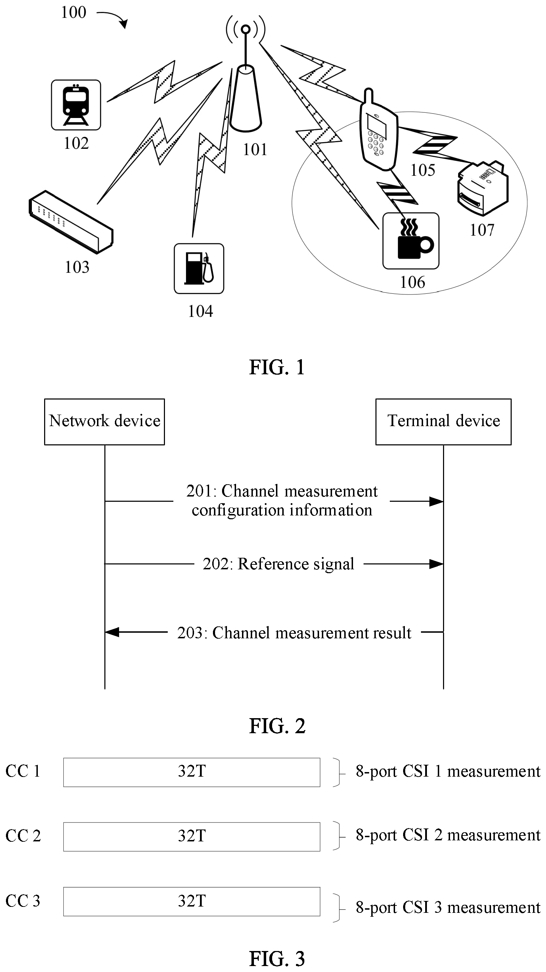

For ease of understanding of embodiments of this application, a communication system to which a channel measurement method according to an embodiment of this application is applicable is first described in detail with reference to FIG. 1.

FIG. 1 is a diagram of a communication system 100 to which a method according to an embodiment of this application is applicable. As shown in FIG. 1, the communication system 100 may include at least one network device, for example, a network device 101 in a 5G system shown in FIG. 1. The communication system 100 may further include at least one terminal device, for example, terminal devices 102 to 107 shown in FIG. 1. The terminal devices 102 to 107 may be mobile or fixed. The network device 101 may communicate with one or more of the terminal devices 102 to 107 through a radio link. Each network device may provide communication coverage for a specific geographical area, and may communicate with a terminal device located in the coverage area. For example, the network device may send configuration information to the terminal device, and the terminal device may send uplink data to the network device based on the configuration information. For another example, the network device may send downlink data to the terminal device. Therefore, the network device 101 and the terminal devices 102 to 107 in FIG. 1 form a communication system.

Optionally, the terminal devices may directly communicate with each other. For example, direct communication between the terminal devices may be implemented using a D2D technology or the like. As shown in the figure, direct communication may be performed between the terminal devices 105 and 106 and between the terminal devices 105 and 107 by using the D2D technology. The terminal device 106 and the terminal device 107 may separately or simultaneously communicate with the terminal device 105.

Alternatively, the terminal devices 105 to 107 may separately communicate with the network device 101. For example, the terminal device may directly communicate with the network device 101, for example, the terminal device 105 and the terminal device 106 in the figure may directly communicate with the network device 101. Alternatively, the terminal device may indirectly communicate with the network device 101, for example, the terminal device 107 in the figure communicates with the network device 101 via the terminal device 106.

It should be understood that FIG. 1 shows an example of one network device, a plurality of terminal devices, and a communication link between communication devices. Optionally, the communication system 100 may include a plurality of network devices, and a coverage area of each network device may include another quantity of terminal devices, for example, more or fewer terminal devices. This is not limited in this application.

A plurality of antennas may be configured for the foregoing communication devices, for example, the network device 101 and the terminal devices 102 to 107 in FIG. 1. The plurality of antennas may include at least one transmit antenna configured to send a signal and at least one receive antenna configured to receive a signal. In addition, each communication device further additionally includes a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving. Therefore, the network device may communicate with the terminal devices by using a multi-antenna technology.

Optionally, the wireless communication system 100 may further include another network entity, for example, a network controller or a mobility management entity. This is not limited in embodiments of this application.

FIG. 2 is a diagram of a basic procedure of a network device obtaining CSI of a downlink channel.

It should be understood that, in an FDD system, because an interval between an uplink frequency band and a downlink frequency band is greater than a bandwidth, there is no complete reciprocity between an uplink channel and a downlink channel. In a conventional FDD system, a terminal device needs to report CSI of a downlink channel to a network device. A basic procedure is shown in FIG. 2.

201: The network device sends channel measurement configuration information to the terminal device.

Correspondingly, the terminal device receives the channel measurement configuration information from the network device.

The channel measurement configuration indicates the terminal device to measure a channel, and indicates time of channel measurement.

202: The network device sends a reference signal to the terminal device.

Correspondingly, the terminal device receives the reference signal from the network device.

It should be understood that the reference signal is used by the terminal device to measure the downlink channel.

The terminal device measures, based on the channel measurement configuration information and the reference signal of the network device, a downlink channel corresponding to the channel measurement configuration information.

203: The terminal device determines a channel measurement result based on the reference signal, and sends the channel measurement result to the network device.

Correspondingly, the network device receives the channel measurement result sent by the terminal device.

It should be understood that the channel obtaining process shown in FIG. 2 may alternatively be used in a TDD system. For example, when uplink measurement pilots (for example, sounding reference signals, SRSs) exist in only some TDD frequency bands during aggregation of a plurality of TDD frequency bands, the method shown in FIG. 2 may be used, so that the network device obtains the CSI of the downlink channel.

In a carrier aggregation scenario, when there are a plurality of FDD frequency bands or a plurality of TDD frequency bands without uplink measurement pilots in aggregated frequency bands, the terminal device needs to measure channels of a plurality of carriers, to support multi-band transmission. The network device needs to configure one CSI-RS resource for each carrier, and the terminal device separately measures, based on a plurality of pieces of channel measurement configuration information, channels corresponding to the plurality of carriers. Measurement of each carrier occupies an independent CSI measurement capability of the terminal device.

Due to factors such as a hardware resource of the terminal device, a measurement capability of the terminal device is limited. For example, the measurement capability of the terminal device supports two 32-port CSI measurement operations, or eight 8-port CSI measurement operations. In a case of three bands, as shown in FIG. 3, each carrier corresponds to 32 ports (marked as 32T in the figure), and the terminal device can support only an eight-port channel measurement operation on each carrier, that is, three CSI eight-port measurement operations.

It can be learned that, in the foregoing carrier aggregation scenario, the terminal device needs to measure channels of a plurality of carriers, to support multi-band transmission. However, because the measurement capability of the terminal device is limited, full-dimensional channel information cannot be obtained. Consequently, transmission performance of the terminal device is low.

In a technical solution of channel measurement in non-coherent joint transmission (non-coherent joint transmission, NCJT), the network device generally configures one or more resource pairs (resource pairs) in one CSI-RS resource set (CSI-RS resource set). The terminal device performs joint measurement on a channel in the NCJT based on the one or more resource pairs. However, because measurement resources in the one or more resource pairs are from the same CSI-RS resource set, that is, the one or more resource pairs belong to a measurement resource of a same carrier, that the terminal device measures the channel in the NCJT based on the one or more resource pairs means that the terminal device measures a channel corresponding to the same carrier, and cannot perform multi-band joint channel measurement.

In related discussion of network energy-saving channel measurement, it is proposed that the network device includes a plurality of CSI reporting sub-configurations in one CSI reporting configuration, and each sub-configuration is associated with one or more CSI measurement resources. CSI fed back by the terminal device to the network device is sent to the network device in a same CSI report. The one or more measurement resources associated with the plurality of CSI reporting sub-configurations in the CSI reporting configuration of the network device belong to a same carrier. In other words, measurement resources associated with the CSI sub-configurations of the terminal device belong to a same carrier. Therefore, the terminal device cannot support multi-band joint channel measurement.

For technical problems in related technical solutions, this application provides a resource configuration method, so that in the carrier aggregation scenario, the terminal device can perform joint measurement on a plurality of carriers.

When the terminal device performs joint measurement on the plurality of carriers, a total bandwidth of the plurality of carriers cannot exceed a maximum bandwidth (for example, 100 M) that can be supported by a single carrier.

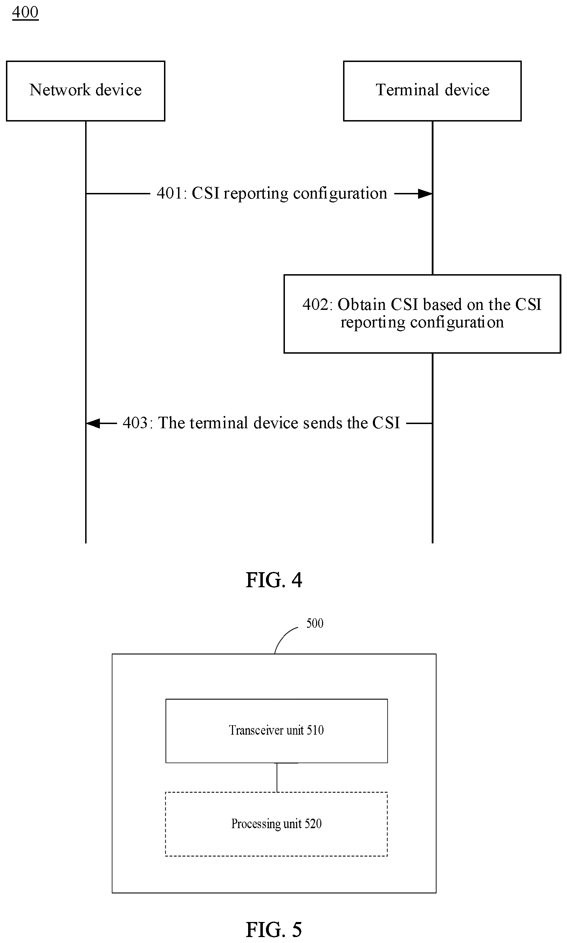

FIG. 4 is a schematic flowchart of a resource configuration method according to this application.

401: A network device sends a CSI reporting configuration to a terminal device.

Correspondingly, the terminal device receives the CSI reporting configuration from the network device.

In a possible implementation, the CSI reporting configuration includes N fields and indication information of N CSI resource configurations, the N fields are in one-to-one correspondence with the indication information of the N CSI resource configurations, and an n^{th} field in the N fields indicates an n^{th} carrier associated with a CSI resource configuration indicated by indication information of an n^{th} CSI resource configuration. In other words, the N CSI resource configurations are associated with N carriers. N is a positive integer greater than 1, and n is a positive integer less than or equal to N.

It should be understood that the indication information of the CSI resource configurations may be some or all CSI resource configurations, or may indicate information about the CSI resource configurations (for example, indexes, sequence numbers, or identifiers of the CSI resource configurations).

For example, the N fields may be N carrier fields, or the N fields may be one or more groups of carrier fields, and the one or more groups of carrier fields include N carrier fields.

In this implementation, the terminal device performs, based on the N fields in the CSI reporting configuration, channel measurement on the N carriers associated with the N CSI resource configurations, so that the terminal device performs joint channel measurement on the N carriers. In addition, the N fields are added to the CSI reporting configuration to implement good compatibility with an existing standard. In other words, a CSI reporting configuration in the existing standard does not need to be greatly changed, and the terminal device performs joint channel measurement on the N carriers only by adding the N fields.

In another possible implementation, the CSI reporting configuration includes N CSI reporting sub-configurations, and the N CSI reporting sub-configurations include N fields and indication information of N CSI resource configurations. The N fields, the indication information of the N CSI resource configurations, and the N CSI reporting sub-configurations are in one-to-one correspondence. In other words, the N CSI reporting sub-configurations are in one-to-one correspondence with the N CSI resource configurations, and the N CSI resource configurations are associated with the N carriers. In other words, the n^{th} field in the N fields indicates the n^{th} carrier associated with the n^{th} CSI resource configuration indicated by the indication information of the CSI resource configuration included in an n^{th} CSI reporting sub-configuration.

In this implementation, the N fields are added to the N CSI reporting sub-configurations in the CSI reporting configuration, the N fields are in one-to-one correspondence with the N CSI reporting sub-configurations, the N CSI reporting sub-configurations are in one-to-one correspondence with the N CSI resource configurations, and the N CSI resource configurations are associated with the N carriers. In other words, the terminal device may determine the N fields based on the N reporting sub-configurations in the CSI reporting configuration, and perform, by using the N CSI resource configurations corresponding to the N fields, channel measurement on the N carriers associated with the N CSI resource configurations, so that the terminal device performs joint channel measurement on the N carriers.

In still another possible implementation, the CSI reporting configuration includes N CSI reporting sub-configurations and at least one CSI measurement resource group. The N CSI reporting sub-configurations include N fields, and the N fields indicate N carriers associated with N CSI resource configurations. The N CSI reporting sub-configurations, the N CSI resource configurations, and the N fields are in one-to-one correspondence.

The CSI reporting configuration further includes the indication information of the N CSI resource configurations, or the N CSI reporting sub-configurations further include the indication information of the N CSI resource configurations. When the CSI reporting configuration includes the indication information of the N CSI resource configurations and the N CSI reporting sub-configurations, the indication information of the N CSI resource configurations is in one-to-one correspondence with the N CSI reporting sub-configurations. When the CSI reporting configuration includes the N CSI reporting sub-configurations, and the N CSI reporting sub-configurations include the indication information of the N CSI resource configurations, the indication information of the N CSI resource configurations is in one-to-one correspondence with the N CSI reporting sub-configurations.

The N CSI resource configurations include M CSI measurement resources, where M represents a quantity of CSI measurement resources associated with the N CSI resource configurations, and a specific value of M is determined based on a quantity of CSI measurement resources configured by a system or the network device.

It should be understood that a quantity of CSI measurement resources included in each of the at least one CSI measurement resource group is less than or equal to M. The at least one CSI measurement resource group includes m CSI measurement resources in the M CSI measurement resources, and the m CSI measurement resources correspond to the N carriers. The terminal device performs channel measurement on the N carriers based on the m CSI measurement resources, where M≥m≥N. The m CSI measurement resources are some or all of the M CSI measurement resources.

It should be understood that the at least one CSI measurement resource group includes the m CSI measurement resources, and the m CSI measurement resources correspond to the N CSI resource configurations. For example, when m=N, the m CSI measurement resources correspond to the N CSI resource configurations in sequence. To be specific, a 1^{st} CSI measurement resource in the at least one CSI measurement resource group corresponds to a 1^{st} CSI resource configuration, a 2^{nd} CSI measurement resource corresponds to a 2^{nd} CSI resource configuration, and so on. When m>N, the network device may directly or indirectly indicate a correspondence between the m CSI measurement resources and the N CSI resource configurations by using indication signaling. For example, the network device may indicate, by using the indication signaling, a quantity of CSI measurement resources corresponding to each of the N CSI resource configurations. Assuming that N=2 and m=3, the network device indicates, by using the indication signaling, that a 1^{st} CSI measurement resource in the at least one CSI measurement resource group corresponds to a 1^{st} CSI resource configuration, and a 2^{nd} CSI measurement resource and a 3^{rd} CSI measurement resource correspond to a 2^{nd} CSI resource configuration; or the network device indicates, by using the indication signaling, that a 1^{st} CSI measurement resource and a 2^{nd} CSI measurement resource in the at least one CSI measurement resource group correspond to a 1^{st} CSI resource configuration, and a 3^{rd} CSI measurement resource correspond to a 2^{nd} CSI resource configuration.

It should be further understood that the network device may indicate a correspondence between the CSI measurement resource and the CSI resource configuration by using indication information. Alternatively, the terminal device predefines the correspondence between the CSI measurement resource and the CSI resource configuration, and the network device does not need to indicate the correspondence between the CSI measurement resource and the CSI resource configuration by using signaling. Alternatively, the terminal device predefines a plurality of correspondences between CSI measurement resources and CSI resource configurations, and the network device indicates sequence numbers or index numbers of the plurality of correspondences by using signaling, or the like. This is not specifically limited in this application.

In this implementation, the terminal device based on the N CSI reporting sub-configurations and the at least one CSI measurement resource group in the CSI reporting configuration. The N CSI reporting sub-configurations includes the N fields. The terminal device performs channel measurement on the N carriers associated with the N CSI resource configurations in the CSI reporting configuration, so that the terminal device performs joint channel measurement on the N carriers. In addition, during joint channel measurement of the N carriers, the terminal device performs joint channel measurement on the N carriers by using the CSI measurement resource in the at least one CSI measurement resource group, and does not need to monitor excessive measurement resources, to reduce complexity of the terminal device and reduce resource overheads of the terminal device.

In yet another possible implementation, the CSI reporting configuration includes N CSI reporting sub-configurations. The N CSI reporting sub-configurations include N fields, N' CSI measurement resource groups, and indication information of N CSI resource configurations. N' is a positive integer greater than or equal to N. To be specific, each of the N CSI reporting sub-configurations includes at least one CSI measurement resource group. The N CSI reporting sub-configurations, the N fields, and the indication information of the N CSI resource configurations are in one-to-one correspondence. The terminal device may determine, based on a CSI reporting sub-configuration, a CSI measurement resource included in the CSI reporting sub-configuration. Based on a field and indication information of a CSI resource configuration that are included in the CSI reporting sub-configuration, the terminal device determines, from CSI measurement resources in a CSI measurement resource group included in the CSI reporting sub-configuration, a CSI measurement resource used to measure the field.

It is assumed that the N' CSI measurement resource groups include m different CSI measurement resources, and the m CSI measurement resources correspond to the N CSI resource configurations, where M≥m≥N. M is a quantity of CSI measurement resources included in the N CSI resource configurations associated with the N fields, and a specific value of M is determined based on a quantity of CSI measurement resources configured by a system or the network device. Each of the N CSI reporting sub-configurations includes at least one CSI measurement resource group. CSI measurement resources included in CSI measurement resource groups that belong to a same CSI reporting sub-configuration correspond to a same carrier.

For example, the CSI reporting configuration includes a CSI reporting sub-configuration #1 and a CSI reporting sub-configuration #2. A field corresponding to the CSI reporting sub-configuration #1 is carrier#1, and carrier#1 indicates that a carrier is a carrier #1. A field corresponding to the CSI reporting sub-configuration #2 is carrier#2, and carrier#2 indicates that a carrier is a carrier #2. The CSI reporting sub-configuration #1 includes a CSI measurement resource group #1-1 and a CSI measurement resource group #1-2. The CSI measurement resource group #1-1 includes a CSI measurement resource #1, a CSI measurement resource #2, and a CSI measurement resource #3. The CSI measurement resource group #1-2 includes a CSI measurement resource #4 and a CSI measurement resource #5. In other words, a carrier corresponding to the CSI measurement resource #1, the CSI measurement resource #2, and the CSI measurement resource #3 is the carrier #1, and a carrier corresponding to the CSI measurement resource #4 and the CSI measurement resource #5 is the carrier #1.

In yet another possible implementation, the CSI reporting configuration includes at least one CSI measurement resource group and N fields, the N fields are in one-to-one correspondence with N CSI resource configurations, the N CSI resource configurations include M CSI measurement resources, and the at least one CSI measurement resource combination includes m CSI measurement resources in the M CSI measurement resources, where M≥m≥N. A quantity of CSI measurement resources included in each of the at least one CSI measurement resource group is less than or equal to M and is greater than or equal to N. Quantities of CSI measurement resources in different CSI measurement resource groups may be the same or may be different. A corresponding manner may be described above, and details are not described herein again.

Optionally, the CSI reporting configuration is determined by the network device based on a capability of the terminal device to perform joint channel measurement.

402: The terminal device obtains CSI based on the CSI reporting configuration.

For example, after the terminal device receives the CSI reporting configuration from the network device, the terminal device obtains the CSI based on the CSI reporting configuration. The CSI is CSI of the N carriers corresponding to the N CSI resource configurations. The N CSI resource configurations are included in the CSI reporting configuration, or the N CSI resource configurations are included in the N CSI reporting sub-configurations, and the N CSI reporting sub-configurations are included in the CSI reporting configuration.

In a possible implementation, the terminal device receives the CSI reporting configuration from the network device, and the terminal device determines the N CSI resource configurations based on the N fields and the indication information of the N CSI resource configurations in the CSI reporting configuration. The N fields are in one-to-one correspondence with the indication information of the N CSI resource configurations, and the N fields indicate the N carriers associated with the CSI resource configurations indicated by the indication information of the N CSI resource configurations. For example, the CSI resource configurations indicated by the indication information of the N CSI resource configurations include the M CSI measurement resources. In other words, the M CSI measurement resources can be used by the terminal device to perform channel measurement on the N carriers, to obtain the CSI. The CSI corresponds to channel state information of the N carriers. M represents the quantity of CSI measurement resources associated with the N CSI resource configurations indicated by the indication information of the N CSI resource configurations, and the specific value of M is determined based on the quantity of CSI measurement resources configured by the system or the network device.

It should be understood that, when performing channel measurement on the N carriers based on the M CSI measurement resources, the terminal device may perform channel measurement on the N carriers by using some or all of the M CSI measurement resources. For example, the terminal device performs channel measurement on the N carriers by using the m CSI measurement resources, where M≥m≥N.

When the terminal device obtains the CSI based on the m CSI measurement resources, an interval between the m CSI measurement resources on a time domain resource is less than or equal to a first threshold, where the first threshold is a positive integer. A value of the first threshold may be predefined, preconfigured, or indicated by the network device. This is not specifically limited in this application. For example, an interval between slots in which the m CSI measurement resources are located is less than or equal to X slots, where X is a positive integer. Channels of the carriers associated with the m CSI measurement resources have a high correlation in the X slots (where for example, a correlation between a channel in a 1^{st} slot and a channel in an X^{th} slot in the X slots is greater than or equal to 0.99). A specific value of X is not limited in this application.

It should be further understood that the indication information of the N CSI resource configurations may be some or all CSI resource configurations, or may indicate information about the CSI resource configurations (for example, indexes, sequence numbers, or identifiers of the CSI resource configurations).

When the N CSI resource configurations are sent by the network device to the terminal device by using the indication information of the N CSI resource configurations that is in the CSI reporting configuration, the terminal device may directly determine the N CSI resource configurations based on the CSI reporting configuration.

When the indication information of the N CSI resource configurations indicates the information about the CSI resource configurations (for example, the indexes, the sequence numbers, or the identifiers of the CSI resource configurations), the terminal device predefines/preconfigures a correspondence between the N CSI resource configurations and the information about the N CSI resource configurations (for example, the indexes, the sequence numbers, or the identifiers of the CSI resource configurations). It is assumed that the information about the CSI resource configurations is the indexes of the CSI resource configurations. After the terminal device receives the CSI reporting configuration, the terminal device determines the N CSI resource configurations based on the N fields and the indexes of the N CSI resource configurations in the CSI reporting configuration, and a correspondence between the N CSI resource configurations and the indexes of the N CSI resource configurations that is predefined/preconfigured by the terminal device.

In another possible implementation, the terminal device receives the CSI reporting configuration of the network device. The CSI reporting configuration includes the N CSI reporting sub-configurations, and the N CSI reporting sub-configurations include the N fields and the indication information of the N CSI resource configurations. The N fields, the indication information of the N CSI resource configurations, and the N CSI reporting sub-configurations are in one-to-one correspondence. Based on the indication information of the N CSI resource configurations and the N fields that are included in the N CSI reporting sub-configurations, the terminal device performs, by using some or all of the M CSI measurement resources indicated by the indication information of the N CSI resource configurations, channel measurement on the N carriers that are associated with the N CSI resource configurations and that are indicated by the N fields, to obtain the CSI. Some or all of the M CSI measurement resources are used to perform channel measurement on the N carriers. Assuming that the m CSI measurement resources are some or all of the M CSI measurement resources, the m CSI measurement resources can be used to perform channel measurement on the N carriers, where M≥m≥N. The m CSI measurement resources are described above, and details are not described herein again.

In still another possible implementation, the terminal device receives the CSI reporting configuration of the network device. The CSI reporting configuration includes the N CSI reporting sub-configurations and the at least one CSI measurement resource group. The N CSI reporting sub-configurations include the N fields, and the N fields indicate the N carriers associated with N CSI resource configurations. The N CSI reporting sub-configurations, the N CSI resource configurations, and the N fields are in one-to-one correspondence. The terminal device performs, based on a CSI measurement resource included in the at least one CSI measurement resource group, channel measurement on the N carriers that are associated with the N CSI resource configurations and that are indicated by the N fields included in the N CSI reporting configurations, to obtain the CSI.

It should be understood that the N CSI resource configurations may be included in the CSI reporting configuration. The N resource configurations include the M CSI measurement resources. The terminal device determines the m CSI measurement resources based on the M CSI measurement resources and the CSI measurement resource included in the at least one CSI measurement resource group, and performs channel measurement on the N carriers based on the m CSI measurement resources, to obtain the CSI.

It should be further understood that the m CSI measurement resources are some or all of the M CSI measurement resources, and the m CSI measurement resources can be used to perform channel measurement on the N carriers, where M≥m≥N. The m CSI measurement resources are described above, and details are not described herein again.

In yet another possible implementation, the terminal device receives the CSI reporting configuration of the network device. The CSI reporting configuration includes the N CSI reporting sub-configurations. The N CSI reporting sub-configurations include the N fields, the N' CSI measurement resource groups, and the indication information of the N CSI resource configurations. N' is a positive integer greater than or equal to N. To be specific, each of the N CSI reporting sub-configurations includes the at least one CSI measurement resource group. The N CSI reporting sub-configurations, the N fields, and the indication information of the N CSI resource configurations are in one-to-one correspondence. The terminal device performs, by using CSI measurement resources in the N' CSI measurement resource groups, channel measurement on the N carriers that are associated with the N CSI resource configurations and that are indicated by the N fields included in the N CSI reporting sub-configurations, to obtain the CSI.

It should be understood that the CSI measurement resources included in the N' CSI measurement resource groups can be used to perform channel measurement on the N carriers. For example, the indication information of the N CSI resource configurations indicates the M CSI measurement resources, the N' CSI measurement resources include the m CSI measurement resources, the m CSI measurement resources are some or all of the M CSI measurement resources, and the m CSI measurement resources can be used to perform channel measurement on the N carriers, where M≥m≥N. The m CSI measurement resources are described above, and details are not described herein again.

In yet another possible implementation, the terminal device receives the CSI reporting configuration of the network device. The CSI reporting configuration includes the at least one CSI measurement resource group and the N fields, the N fields are in one-to-one correspondence with the N CSI resource configurations, the N CSI resource configurations include the M CSI measurement resources, and the at least one CSI measurement resource combination includes the m CSI measurement resources in the M CSI measurement resources, where M≥m≥N. The terminal device performs, by using the CSI measurement resources (for example, the m CSI measurement resources) in the at least one CSI measurement resource group, channel measurement on the N carriers that are associated with the N CSI resource configurations and that are indicated by the N fields, to obtain the CSI. The m CSI measurement resources are some or all of the M CSI measurement resources, and the m CSI measurement resources can be used to perform channel measurement on the N carriers, where M≥m≥N. The m CSI measurement resources are described above, and details are not described herein again.

It should be understood that the quantity of CSI measurement resources included in each of the at least one CSI measurement resource group is less than or equal to M and is greater than or equal to N. For example, when the at least one CSI measurement resource group includes one CSI measurement resource group: a CSI measurement resource group #1, a quantity of CSI measurement resources included in the CSI measurement resource group #1 is a, where a satisfies that M≥a≥N. When the at least one CSI measurement resource group includes three CSI measurement resource groups: a CSI measurement resource group #1, a CSI measurement resource group #2, and a CSI measurement resource group #3, quantities of CSI measurement resources included in the CSI measurement resource group #1, the CSI measurement resource group #2, and the CSI measurement resource group #3 are a, b, and c, respectively. a, b, and c satisfy that M≥a≥N, M≥b≥N, and M≥c≥N. Specific values of a, b, and c may be the same or may be different. CSI measurement resources respectively included in the CSI measurement resource group #1, the CSI measurement resource group #2, and the CSI measurement resource group #3 may include same CSI measurement resources.

It should be understood that, that the terminal device performs channel measurement on the N carriers based on the m CSI resource configurations, to obtain the CSI may also be understood as that the terminal device performs channel measurement on the N carriers based on the m CSI measurement resources in the M CSI measurement resources corresponding to the N CSI resource configurations, to obtain the CSI. The CSI corresponds to channel state information of the N carriers. The m CSI measurement resources are described above, and details are not described herein again.

403: The terminal device sends the CSI to the network device.

Correspondingly, the network device receives the CSI sent by the terminal device.

For example, the terminal device receives the CSI reporting configuration from the network device, and determines the CSI resource configurations. The terminal device obtains the CSI based on the CSI resource configurations, and sends the CSI to the network device.

It should be understood that the CSI corresponds to the channel state information of the N carriers. The terminal device performs joint channel measurement on the N carriers based on the CSI resource configuration, to obtain a measurement result of the joint channel measurement, that is, the CSI. The terminal device sends the measurement result to the network device. Correspondingly, after receiving the CSI from the terminal device, the network device sends data to the terminal device based on state information of a downlink channel.

It should be understood that the CSI obtained by the terminal device by performing joint channel measurement on the N carriers may include one precoding matrix indicator (precoding matrix indicator, PMI), one rank indicator (rank indicator, RI), and one channel quality indicator (channel quality indicator, CQI), or the CSI may include one PMI, one RI, and N CQIs, and the N CQIs correspond to the N carriers. This is not limited in this application.

According to the method in FIG. 4, the network device sends the CSI reporting configuration to the terminal device. The CSI reporting configuration includes the N fields, and the N fields indicate the N carriers associated with the N CSI resource configurations. The N CSI resource configurations may be included in the CSI reporting configuration, or the N CSI resource configurations may be included in the N CSI reporting sub-configurations, and the N CSI reporting sub-configurations are included in the CSI reporting configuration. The terminal device can perform, based on the CSI measurement resources included in the N CSI resource configurations, channel measurement on the N carriers associated with the N CSI resource configurations, to obtain the CSI. The CSI corresponds to measurement results of the N carriers, so that the terminal device performs joint measurement on a plurality of channels. In addition, in the method shown in FIG. 4, the N fields are added to the CSI reporting configuration, or the N fields are added to the N CSI reporting sub-configurations, where each CSI reporting sub-configuration includes one field. In the CSI reporting sub-configuration, good compatibility with an existing standard is implemented by adding the field. In other words, a CSI reporting sub-configuration in the existing standard does not need to be greatly changed, and the terminal device can perform joint measurement on N channels.

Based on the method shown in FIG. 4, before step 401, the method may further include:

The terminal device sends channel measurement capability information to the network device.

Correspondingly, the network device receives the channel measurement capability information from the terminal device.

The channel measurement capability information is used by the network device to determine the CSI reporting configuration.

It should be understood that the channel measurement capability information of the terminal device may include joint channel measurement capability information of the terminal device.

The joint channel measurement capability information includes one or more of the following: a maximum value of a quantity of carriers (for example, maxNumberBandsPerMeasuredBandCombination) that is supported by the terminal device for joint channel measurement, information about a band combination (for example, SupportedMeasuredBandCombination) supported by the terminal device for joint channel measurement, a maximum total bandwidth (for example, maxBandwidthPerMeasuredBandCombination) supported by the terminal device for joint channel measurement, and a maximum quantity of ports (for example, maxNumberTxPortsPerMeasuredBandCombination) that is supported by the terminal device for joint channel measurement.

The network device determines the CSI reporting configuration based on a joint channel measurement capability of the terminal device. One or more of a value of N in the N fields (where a quantity of fields is equal to a quantity of carriers) in the CSI reporting configuration, a band combination between the N carriers corresponding to the N fields, a maximum total bandwidth of the N carriers corresponding to the N fields, and a maximum quantity of ports that corresponds to the N carriers need to satisfy the joint channel measurement capability of the terminal device.

Based on the method shown in FIG. 4, before step 403, the method may further include:

The terminal device receives first signaling, where the first signaling indicates the terminal device to determine, based on a total bandwidth of the N carriers, a sub-band granularity for channel measurement.

Optionally, the total bandwidth of the N carriers may be a sum of bandwidths of N BWPs corresponding to the N carriers.

The first signaling may be sent by the network device to the terminal device before step 403, or the first signaling may be sent to the terminal device before the terminal device obtains the CSI in step 402, or the first signaling may be sent to the terminal device in step 402.

In step 402, that the terminal device obtains the CSI based on the CSI resource configuration may include:

The terminal device determines, based on the first signaling, the sub-band granularity for channel measurement; and
the terminal device obtains the CSI based on the sub-band granularity and the CSI reporting configuration.

It should be understood that the sub-band granularity is determined based on the total bandwidth of the N carriers, and is not determined based on a sub-band granularity corresponding to a bandwidth of each of the N carriers. The terminal device determines the sub-band granularity based on the total bandwidth of the N carriers, and obtains the CSI based on the CSI reporting configuration. In comparison with the terminal device determining N sub-band granularities based on bandwidths of the N carriers and obtaining the CSI based on the CSI reporting configuration, a quantity of sub-bands used during channel measurement can be reduced. Since processing complexity in channel measurement by the terminal device is positively correlated with the quantity of sub-bands, processing complexity of the terminal device is reduced.

Next, the CSI reporting configuration is exemplified by CSI-ReportConfig, the CSI resource configuration is exemplified by CSI-ResourceConfig, a field included in the CSI reporting configuration and associated with the CSI resource configuration is exemplified by a carrier field, the CSI reporting sub-configuration is exemplified by CSI-ReportSubConfig, and the CSI measurement resource group is exemplified by CSI-MeasurementResourceGroup. Based on the method shown in FIG. 4, with reference to the following example, a resource configuration method provided in an embodiment of this application is described in detail.

Example 1: A network device sends CSI-ReportConfig to a terminal device. The CSI-ReportConfig includes N carrier fields and indication information of N CSI-ResourceConfig (for example, indexes, sequence numbers, or identifiers of the CSI-ResourceConfig). The N carrier fields indicate N carriers associated with the CSI-ResourceConfig indicated by the indication information of the N CSI-ResourceConfig, where N is a positive integer greater than 1. The terminal device obtains CSI based on the N CSI-ResourceConfig, and sends the CSI to the network device.

Example 2: A network device sends CSI-ReportConfig to a terminal device. The CSI-ReportConfig includes N CSI-ReportSubConfig, and the N CSI-ReportSubConfig includes N carrier fields and indication information of N CSI-ResourceConfig. The N carrier fields, the N CSI-ReportSubConfig, and the indication information of the N CSI-ResourceConfig are in one-to-one correspondence. The N carrier fields indicate N carriers associated with the CSI-ResourceConfig indicated by the indication information of the N CSI-ResourceConfig. The terminal device obtains CSI based on the N CSI-ResourceConfig, and sends the CSI to the network device.

Example 3: A network device sends CSI-ReportConfig to a terminal device. The CSI-ReportConfig includes N CSI-ReportSubConfig and at least one CSI-MeasurementResourceGroup. The CSI-ReportConfig further includes indication information of N CSI-ResourceConfig, or each CSI-ReportSubConfig further includes indication information of one CSI-ResourceConfig corresponding to the CSI-ReportSubConfig. The N CSI-ReportSubConfig includes N carrier fields, and the N carrier fields indicate N carriers on which the N CSI-ResourceConfig associated with the N CSI-ReportSubConfig is located, where N is a positive integer greater than 1. The N CSI-ResourceConfig includes M CSI-MeasurementResource. The at least one CSI-MeasurementResourceGroup includes m CSI-MeasurementResource in the M CSI-MeasurementResource, and the m CSI-MeasurementResource corresponds to the N carriers, where M≥m≥N. The terminal device performs channel measurement on the N carriers based on the N CSI-ReportSubConfig and the m CSI-MeasurementResource in the at least one CSI-MeasurementResourceGroup to obtain CSI, and sends the CSI to the network device.

Example 4: A network device sends CSI-ReportConfig to a terminal device. The CSI-ReportConfig includes N CSI-ReportSubConfig, and the N CSI-ReportSubConfig includes N carrier fields and N' CSI-MeasurementResourceGroup, where N is a positive integer greater than 1, and N' is a positive integer greater than or equal to N. The N carrier fields are in one-to-one correspondence with the N CSI-ReportSubConfig. The N' CSI-MeasurementResourceGroup includes m different CSI-MeasurementResource, the m CSI-MeasurementResource is some or all of M CSI-MeasurementResource, and the M CSI-MeasurementResource is CSI-MeasurementResource included in N CSI-ResourceConfig associated with N carriers, where M≥m≥N. Each of the N CSI-ReportSubConfig includes at least one CSI-MeasurementResourceGroup. In other words, CSI-MeasurementResource in CSI-MeasurementResourceGroup included in each CSI-ReportSubConfig corresponds to a carrier indicated by a same carrier field.

Example 5: A network device sends CSI-ReportConfig to a terminal device. The CSI-ReportConfig includes at least one CSI-MeasurementResourceGroup and N carrier fields. The N carrier fields are in one-to-one correspondence with N CSI-ResourceConfig, the N CSI-ResourceConfig includes M CSI-MeasurementResource, and the at least one CSI-MeasurementResourceGroup includes m CSI-MeasurementResource in the M CSI-MeasurementResource. The m CSI-MeasurementResource corresponds to the N CSI-ResourceConfig, where M≥m≥N. The m CSI-MeasurementResource is used by the terminal device to perform channel measurement on N associated carriers. N is a positive integer greater than 1, and M is a positive integer greater than or equal to N.

### For Example 1:

The CSI-ReportConfig includes the N carrier fields and the indication information of the N CSI-ResourceConfig. The N carrier fields are in one-to-one correspondence with the indication information of the N CSI-ResourceConfig. The N carrier fields indicate the N carriers on which the N CSI-ResourceConfig is located, where N is a positive integer greater than 1.

It is assumed that the CSI-ReportConfig includes one carrier field (for example, carrier#1), and the carrier#1 field indicates a carrier #1 associated with CSI-ResourceConfig#1. A representation form of the CSI-ReportConfig may be shown as follows:

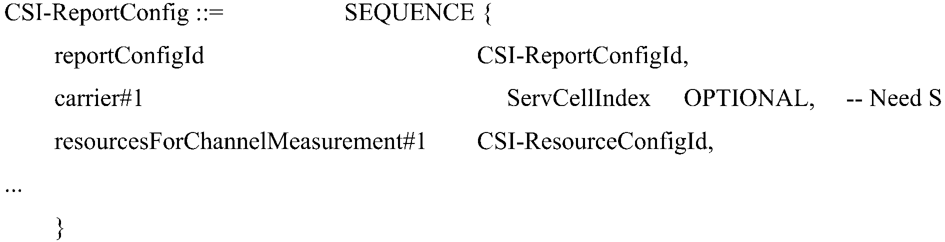

resourcesForChannelMeasurement#1 represents an identifier (identifier, ID) of the CSI-ResourceConfig#1 used for channel measurement. It can be learned that, in this example, indication information of CSI-ResourceConfig is an ID of the CSI-ResourceConfig.

It is assumed that the CSI-ReportConfig includes the N carrier fields, and the N carrier fields indicate the N carriers on which the N CSI-ResourceConfig is located. A representation form of the CSI-ReportConfig may be shown as follows:

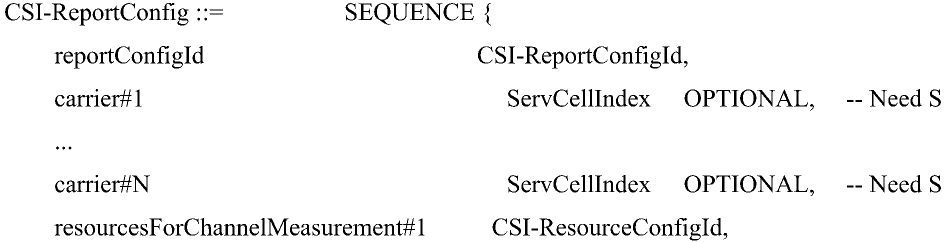

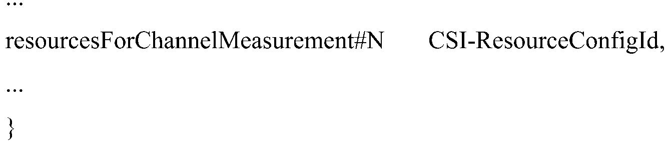

resourcesForChannelMeasurement#1, ..., and resourcesForChannelMeasurement#N represent IDs of the N CSI-ResourceConfig used for channel measurement, which is CSI-ResourceConfig#1, ..., and CSI-ResourceConfig#N.

It should be understood that the N carrier fields may be a set/list in the CSI-ReportConfig. A representation form of the CSI-ReportConfig may be shown as follows:

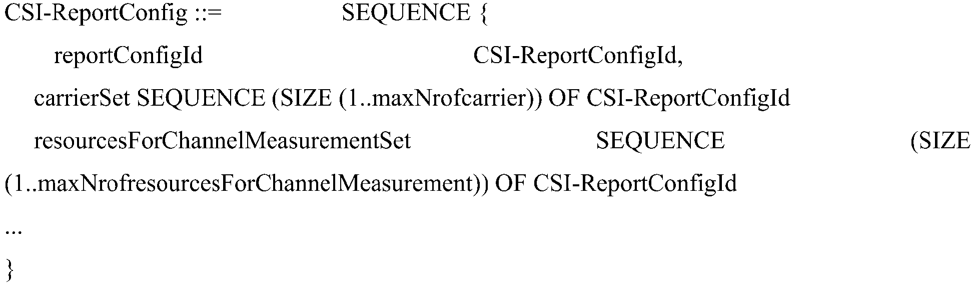

maxNrofcarrier represents a maximum quantity of carrier fields that may be configured by the network device. For example, maxNrofcarrier=N. maxNrof resourcesForChannelMeasurement represents a maximum quantity of CSI-ResourceConfig for channel measurement. For example, maxNrof resourcesForChannelMeasurement=N.

It should be understood that it is assumed that the CSI-ReportConfig includes three carrier fields: carrier#1, carrier#2, and carrier#3, where carrier#1 corresponds to CSI-ResourceConfig#1, carrier#2 corresponds to the CSI-ResourceConfig#2, and carrier#3 corresponds to CSI-ResourceConfig#3. In other words, carrier#1 indicates that a carrier associated with the CSI-ResourceConfig#1 is a carrier #1, carrier#2 indicates that a carrier associated with the CSI-ResourceConfig#2 is a carrier #2, and carrier#3 indicates that a carrier associated with the CSI-ResourceConfig#3 is a carrier #3. resourcesForChannelMeasurement includes IDs corresponding to the CSI-ResourceConfig#1, the CSI-ResourceConfig#2, and the CSI-ResourceConfig#3.

### For Example 2:

The CSI-ReportConfig includes the N CSI-ReportSubConfig, and the N CSI-ReportSubConfig includes the N carrier fields and the indication information of the N CSI-ResourceConfig. The N carrier fields, the indication information of the N CSI-ResourceConfig, and the N CSI-ReportSubConfig are in one-to-one correspondence. The N carrier fields indicate the N carriers on which the N CSI-ResourceConfig associated with the N CSI-ReportSubConfig is located. N is a positive integer greater than 1.

It is assumed that the CSI-ReportConfig includes CSI-ReportSubConfig#1, ..., and CSI-ReportSubConfig#N, and the CSI-ReportSubConfig#1 includes carrier fields, for example, carrier#1, ..., and carrier#N, where carrier#1 indicates a carrier #1 associated with CSI-ResourceConfig#1 associated with the CSI-ReportSubConfig#1, and carrier#N indicates a carrier #N associated with CSI-ResourceConfig#N associated with the CSI-ReportSubConfig#N.

It should be understood that a representation form of carrier#1 in embodiments of this application is merely intended to correspond to the CSI-ReportSubConfig#1, the CSI-ResourceConfig#1, and the like, and does not impose any limitation on the carrier field in this application. For example, during actual application, carrier#1, ..., and carrier#N are all carriers in a specific implementation.

For example, the CSI-ReportConfig includes the N CSI-ReportSubConfig, for example, CSI-ReportSubConfig#1, ..., and CSI-ReportSubConfig#N. A representation form of the CSI-ReportConfig may be shown as follows:

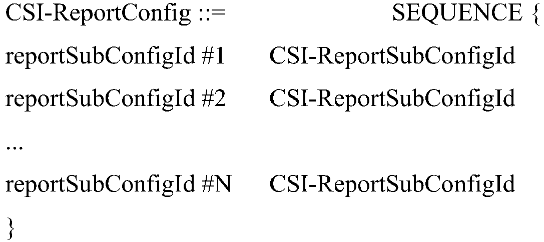

The N CSI-ReportSubConfig includes the N carrier fields, and the N carrier fields are in one-to-one correspondence with the N CSI-ReportSubConfig.

For example, the CSI-ReportSubConfig#1 includes one carrier field, for example, carrier#1. carrier#1 indicates a carrier #1 associated with CSI-ResourceConfig included in the CSI-ReportSubConfig#1. A representation form of the CSI-ReportSubConfig#1 may be shown as follows:

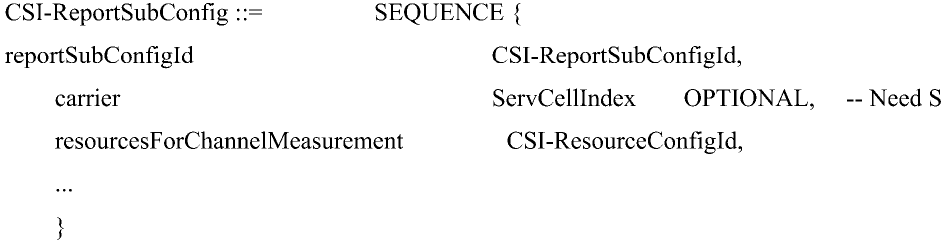

It should be understood that a representation form of the CSI-ReportSubConfig including the carrier field is similar to that of the CSI-ReportSubConfig#1 including the carrier. Details are not enumerated herein.

It should be further understood that the N CSI-ReportSubConfig may be a set/list in the CSI-ReportConfig. A representation form may be shown as follows:

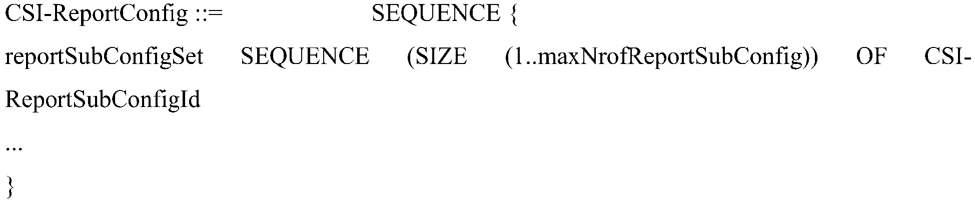

maxNrofReportSubConfig represents a maximum quantity of reporting sub-configurations that may be configured by the network device, and maxNrofReportSubConfig is greater than or equal to N.

It should be understood that, in a specific representation of the CSI-ReportConfig including the N CSI-ReportSubConfig, the N CSI-ReportSubConfig may be represented in the foregoing form of a set/list, or may be represented in a form of an enumeration. This is not limited in this application.

### For Example 3:

The CSI-ReportConfig includes the N CSI-ReportSubConfig and the at least one CSI-MeasurementResourceGroup. The CSI-ReportConfig further includes the indication information of the N CSI-ResourceConfig, or each CSI-ReportSubConfig further includes indication information of one CSI-ResourceConfig corresponding to the CSI-ReportSubConfig. The N CSI-ReportSubConfig includes the N carrier fields, and the N carrier fields indicate the N carriers associated with the N CSI-ResourceConfig associated with the N CSI-ReportSubConfig. The N CSI-ResourceConfig includes the M CSI-MeasurementResource, the at least one CSI-MeasurementResourceGroup includes the m CSI-MeasurementResource in the M CSI-MeasurementResource, and the m CSI-MeasurementResource corresponds to the N carriers, where M≥m≥N. The terminal device performs channel measurement on the N carriers based on the N CSI-ReportSubConfig and the m CSI-MeasurementResource in the at least one CSI-MeasurementResourceGroup.

It should be understood that an interval between the m CSI-MeasurementResource in terms of a slot is less than or equal to X slots, where X is a positive integer. Channels of the carriers associated with the m CSI-MeasurementResource have a high correlation in the X slots (where for example, a correlation between a channel in a 1^{st} slot and a channel in an X^{th} slot in the X slots is greater than or equal to 0.99). A specific value of X is not limited in this application.

When an interval/intervals between any two or more CSI-MeasurementResource in terms of a slot is/are equal to 0, it indicates that the CSI-MeasurementResource is in a same slot. When an interval/intervals between any two or more CSI-MeasurementResource in terms of a slot is/are not equal to 0, it indicates that the CSI-MeasurementResource is not in a same slot, and the interval/intervals between the CSI-MeasurementResource is/are X slots.

It is assumed that the CSI-ReportConfig includes two CSI-ReportSubConfig (for example, CSI-ReportSubConfig#1 and CSI-ReportSubConfig#2) and one CSI-MeasurementResourceGroup (for example, CSI-MeasurementResourceGroup#1). The CSI-ReportSubConfig#1 includes carrier#1, and carrier#1 indicates a carrier #1 associated with the CSI-ReportSubConfig#1. The CSI-ReportSubConfig#2 includes carrier#2, and carrier#2 indicates a carrier #2 associated with the CSI-ReportSubConfig#2. The CSI-MeasurementResourceGroup#1 includes three CSI-MeasurementResource (for example, CSI-MeasurementResource#1, CSI-MeasurementResource#2, and CSI-MeasurementResource#3). The CSI-MeasurementResource#1 corresponds to the CSI-ResourceConfig#1, the CSI-MeasurementResource#2 corresponds to the CSI-ResourceConfig#1, and the CSI-MeasurementResource#3 corresponds to CSI-ResourceConfig#2. The terminal device determines, based on the CSI-ReportSubConfig#1, the CSI-ReportSubConfig#2, and the CSI-MeasurementResourceGroup#1, to perform channel measurement on the carrier #1 by using the CSI-MeasurementResource#1 and the CSI-MeasurementResource#2, and to perform channel measurement on the carrier #2 by using MeasurementResource#3.

For example, the CSI-ReportConfig includes the N CSI-ReportSubConfig (for example, CSI-ReportSubConfig#1, ..., and CSI-ReportSubConfig#N) and at least one CSI-MeasurementResourceGroup. A representation form of the CSI-ReportConfig may be shown as follows:

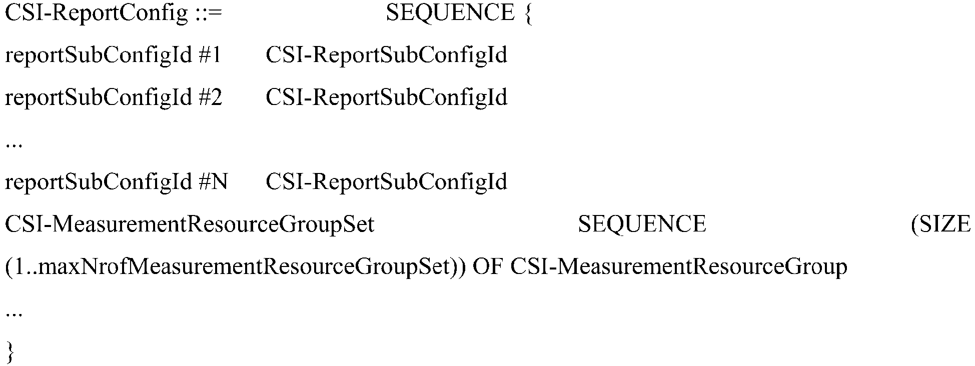

The CSI-MeasurementResourceGroupSet includes m CSI-MeasurementResource, the m CSI-MeasurementResource is some or all of the M CSI-MeasurementResource, and the M CSI-MeasurementResource is configured by a system or the network device.

It should be understood that the CSI-ReportSubConfig and CSI-MeasurementResourceGroup included in the CSI-ReportConfig may be represented in a form of a set/list, or may be represented in a form of an enumeration. This is not specifically limited in this application.

For example, the CSI-ReportSubConfig#1 includes one carrier field (for example, carrier#1), and carrier#1 indicates a carrier #1 associated with CSI-ResourceConfig#1 associated with the CSI-ReportSubConfig#1. Optionally, the CSI-ResourceConfig may be included in the CSI-ReportConfig or included in the CSI-ReportSubConfig. This is not limited in this application.

It should be understood that, when indication information of the CSI-ResourceConfig (for example, an ID of the CSI-ResourceConfig) is included in the CSI-ReportConfig, the CSI-ReportSubConfig#1 does not include the ID of the CSI-ResourceConfig. A representation form of the CSI-ReportConfig is shown as follows:

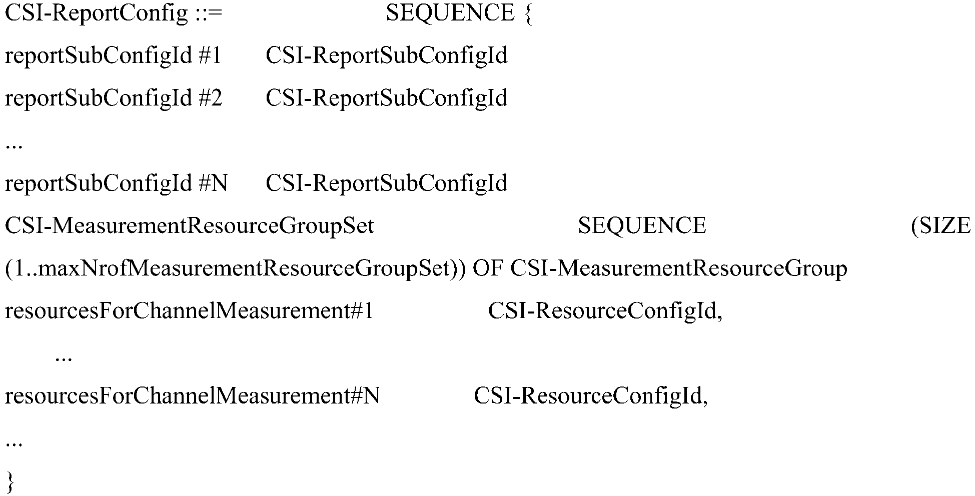

The CSI-ReportConfig includes one or more CSI-MeasurementResourceGroup. In other words, the CSI-MeasurementResourceGroupSet includes one or more CSI-MeasurementResourceGroup. CSI-MeasurementResource included in the one or more CSI-MeasurementResourceGroup is from CSI-MeasurementResource included in the CSI-ResourceConfig in the CSI-ReportConfig.

It should be understood that the CSI-ReportSubConfig and the CSI-ResourceConfig included in the CSI-ReportConfig may be represented in a form of a list/set, or may be represented in a form of an enumeration. This is not specifically limited in this application.

A representation form of the CSI-ReportSubConfig#1 may be shown as follows:

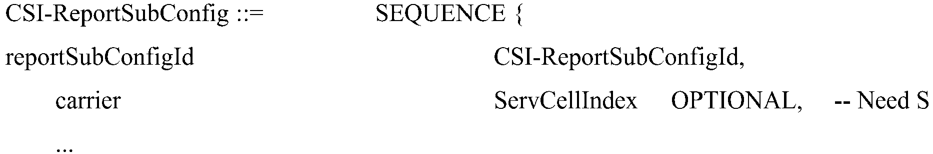

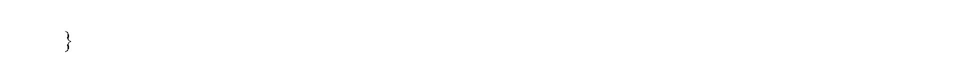

It should be understood that when the indication information (for example, an ID of the CSI-ResourceConfig) is included in the CSI-ReportSubConfig#1, the CSI-ReportConfig does not include the ID of the CSI-ResourceConfig. A representation form of the CSI-ReportSubConfig#1 may be shown as follows:

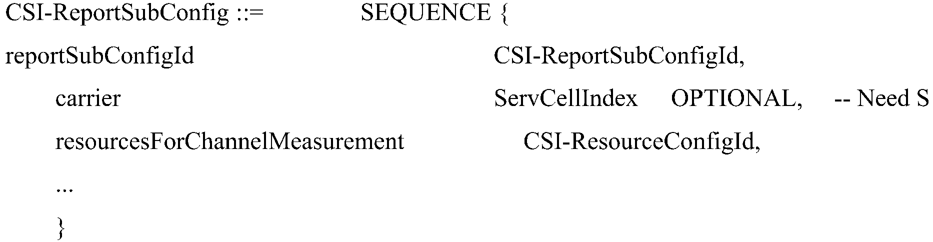

A representation form of the CSI-MeasurementResourceGroup#1 may be shown as follows:

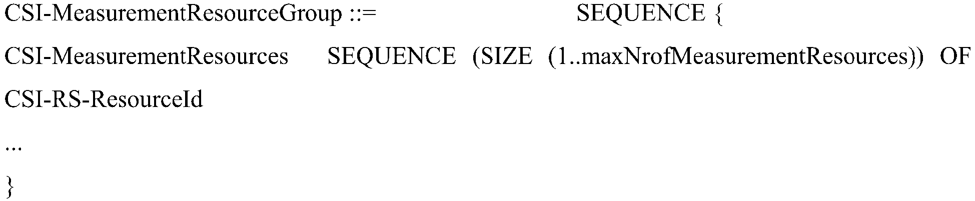

It should be understood that the CSI-MeasurementResource included in CSI-MeasurementResourceGroup#1 may be represented in the foregoing form of a list/set, or may be represented in a form of an enumeration. This is not specifically limited in this application.

maxNrofMeasurementResources indicates a maximum quantity of CSI-MeasurementResource included in CSI-MeasurementResourceGroup, and maxNrofMeasurementResourceSet is greater than or equal to 1.

### For Example 4:

The CSI-ReportConfig includes the N CSI-ReportSubConfig, and the N CSI-ReportSubConfig includes the N carrier fields and the indication information of the N CSI-ResourceConfig. The N CSI-ReportSubConfig, the N carrier fields, and the indication information of the N CSI-ResourceConfig are in one-to-one correspondence. The N CSI-ReportSubConfig further includes the N' CSI-MeasurementResourceGroup, and each of the N CSI-ReportSubConfig includes at least one CSI-MeasurementResourceGroup, that is, N' is a positive integer greater than or equal to N. The N' CSI-MeasurementResourceGroup includes the m different CSI-MeasurementResource, the m CSI-MeasurementResource is some or all of the M CSI-MeasurementResource, and the M CSI-MeasurementResource is CSI-MeasurementResource included in the N CSI-ResourceConfig associated with the N carriers, where M≥m≥N. Each of the N CSI-ReportSubConfig includes at least one CSI-MeasurementResourceGroup. In other words, CSI-MeasurementResource in CSI-MeasurementResourceGroup included in each CSI-ReportSubConfig is associated with a carrier indicated by a same carrier field.

It should be understood that an interval between the m CSI-MeasurementResource in terms of a slot is less than or equal to X slots, where X is a positive integer. Channels of the carriers associated with the m CSI-MeasurementResource have a high correlation in the X slots (where for example, a correlation between a channel in a 1^{st} slot and a channel in an X^{th} slot in the X slots is greater than or equal to 0.99). A specific value of X is not limited in this application.

When an interval/intervals between any two or more CSI-MeasurementResource in terms of a slot is/are equal to 0, it indicates that the CSI-MeasurementResource is in a same slot. When an interval/intervals between any two or more CSI-MeasurementResource in terms of a slot is/are not equal to 0, it indicates that the CSI-MeasurementResource is not in a same slot, and the interval/intervals between the CSI-MeasurementResource is/are X slots.

It is assumed that the CSI-ReportConfig includes CSI-ReportSubConfig#1, ..., and CSI-ReportSubConfig#N. The CSI-ReportSubConfig#1 includes a carrier field, CSI-ResourceConfig identifier field, and CSI-MeasurementResourceGroupSet field, for example, carrier#1 and CSI-MeasurementResourceGroupSet. carrier #1 indicates a carrier #1 associated with CSI-ResourceConfig#1 associated with the CSI-ReportSubConfig#1. The MeasurementResourceGroupSet includes only one MeasurementResourceGroup (for example, CSI-MeasurementResourceGroup#1). The CSI-MeasurementResourceGroup#1 includes CSI-MeasurementResource#1 and CSI-MeasurementResource#2.

For example, the CSI-ReportConfig includes the N CSI-ReportSubConfig, for example, CSI-ReportSubConfig#1, ..., and CSI-ReportSubConfig#N. A representation form of the CSI-ReportConfig may be shown as follows:

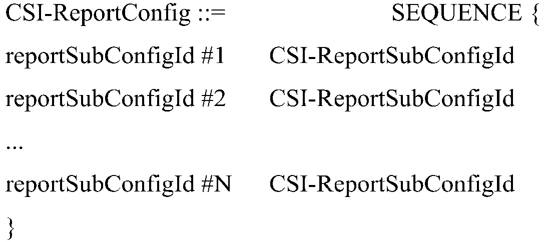

It should be understood that the N CSI-ReportSubConfig included in the CSI-ReportConfig may be represented in the foregoing form of an enumeration, or may be represented in a form of a list/set. This is not specifically limited in this application.

The N CSI-ReportSubConfig includes the N carrier fields, and the N carriers are in one-to-one correspondence with the N CSI-ReportSubConfig.

For example, the CSI-ReportSubConfig#1 includes one carrier (for example, carrier#1) and CSI-MeasurementResourceGroupSet, and the CSI-MeasurementResourceGroupSet may include a plurality of CSI-MeasurementResourceGroup. A representation form of the CSI-ReportSubConfig#1 may be shown as follows:

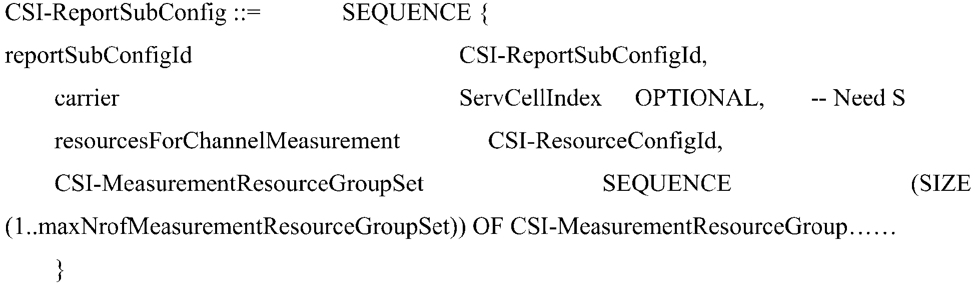

It should be understood that CSI-MeasurementResourceGroup included in CSI-ReportSubConfig may be represented in the foregoing form of a list/set, or may be represented in a form of an enumeration. This is not specifically limited in this application.

The N CSI-ReportSubConfig includes the N' CSI-MeasurementResourceGroup, and each of the N CSI-ReportSubConfig includes at least one CSI-MeasurementResourceGroup, where N'≥N. The N' CSI-MeasurementResourceGroup includes the m CSI-MeasurementResource.

For example, the CSI-MeasurementResourceGroup#1 includes CSI-MeasurementResource#1 and CSI-MeasurementResource#2. A representation form of the CSI-MeasurementResourceGroup#1 may be shown as follows:

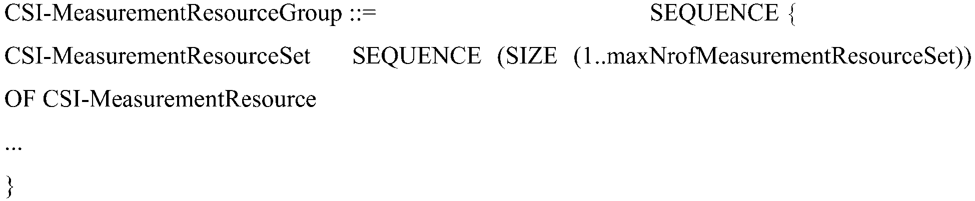

It should be understood that CSI-MeasurementResource included in CSI-MeasurementResourceGroup may be represented in the foregoing form of list/set, or may be represented in a form of an enumeration. This is not specifically limited in this application.

maxNrofMeasurementResourceSet indicates a maximum quantity of CSI-MeasurementResource included in the CSI-MeasurementResourceGroup.

### For Example 5:

The CSI-ReportConfig includes the at least one CSI-MeasurementResourceGroup and the N carrier fields. The N carrier fields are in one-to-one correspondence with the N CSI-ResourceConfig, the N CSI-ResourceConfig includes the M CSI-MeasurementResource, and the at least one CSI-MeasurementResourceGroup includes the m CSI-MeasurementResource in the M CSI-MeasurementResource. The m CSI-MeasurementResource corresponds to the N CSI-ResourceConfig, where M≥m≥N. The m CSI-MeasurementResource is used by the terminal device to perform channel measurement on N associated carriers. N is a positive integer greater than 1, and M is a positive integer greater than or equal to N.

For example, the CSI-ReportConfig includes one CSI-MeasurementResourceGroup (for example, CSI-MeasurementResourceGroup#1) and N carrier fields. A representation form of the CSI-ReportConfig may be shown as follows:

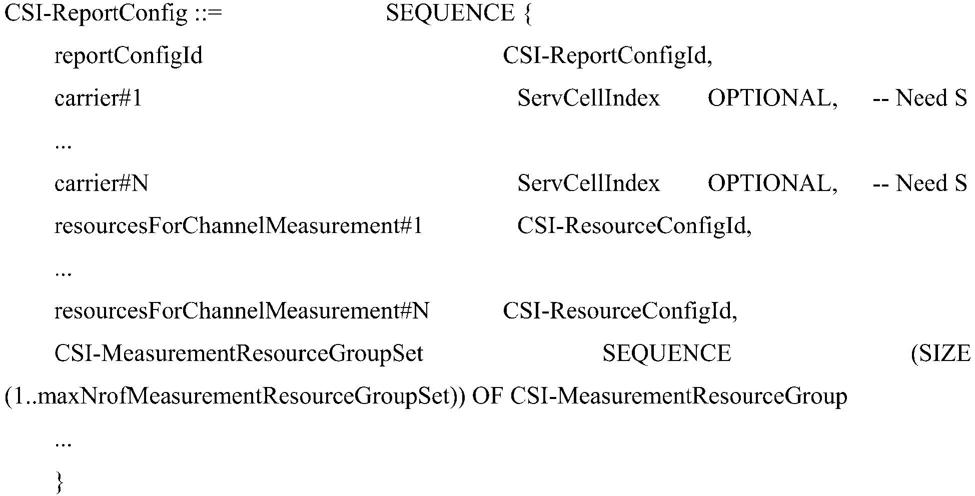

The CSI-ReportConfig includes one or more CSI-MeasurementResourceGroup. In other words, the CSI-MeasurementResourceGroupSet includes one or more CSI-MeasurementResourceGroup.

It should be understood that the CSI-ReportConfig includes a plurality of CSI-MeasurementResourceGroup and the N carrier fields. In a specific representation of the CSI-ReportConfig, the N carrier fields may be represented in the foregoing form of an enumeration, or may be represented in a form of a set/list. The CSI-MeasurementResourceGroup may be represented may be represented in the foregoing form of a set/list, or may be represented in a form of an enumeration. This is not limited in this application.

The CSI-MeasurementResourceGroupSet includes the m CSI-MeasurementResource. A representation form of the CSI-MeasurementResourceGroup is shown as follows:

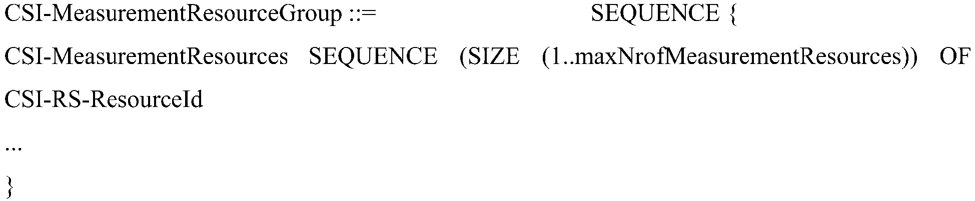

It should be understood that the CSI-MeasurementResourceGroupSet includes the m CSI-MeasurementResource, and the m CSI-MeasurementResource may be represented in the foregoing form of a set/list, or the m CSI-MeasurementResource may be enumerated. For details, refer to the example in Example 1.

It should be understood that, in Example 1 to Example 5 of this application, the terminal device performs channel measurement on the N carriers by using the m CSI-MeasurementResource. An interval between CSI-MeasurementResource in the m CSI-MeasurementResource in terms of a slot is less than or equal to X slots, where X is a positive integer. Channels of the carriers associated with the m CSI-MeasurementResource have a high correlation in the X slots (where for example, a correlation between a channel in a 1^{st} slot and a channel in an X^{th} slot in the X slots is greater than or equal to 0.99). A specific value of X is not limited in this application.

When an interval/intervals between any two or more CSI-MeasurementResource in terms of a slot is/are equal to 0, it indicates that the CSI-MeasurementResource is in a same slot. When an interval/intervals between any two or more CSI-MeasurementResource in terms of a slot is/are not equal to 0, it indicates that the CSI-MeasurementResource is not in a same slot, and the interval/intervals between the CSI-MeasurementResource is/are X slots.

It should be further understood that the foregoing Example 1 to Example 5 are merely examples for describing different cases of the CSI reporting configuration and representation forms in different cases in this application. Certainly, for the CSI reporting configuration, there may further be other cases or other representations obtained by combining the foregoing Example 1 to Example 5. Details are not enumerated in this application.

Based on the descriptions in Example 1 to Example 5, after the terminal device receives the CSI-ReportConfig from the network device, the terminal device obtains the CSI based on the N CSI-ResourceConfig determined based on the CSI-ReportConfig. The CSI is CSI of the N carriers associated with the N CSI-ResourceConfig.

The terminal device performs, based on the N CSI-ResourceConfig, channel measurement on the N carriers associated with the N CSI-ResourceConfig.

It is assumed that the terminal device uses three CSI-ResourceConfig: CSI-ResourceConfig#1, CSI-ResourceConfig#2, and CSI-ResourceConfig#3. CSI-MeasurementResource corresponding to the CSI-ResourceConfig#1 is CSI-MeasurementResource#1-1 and CSI-MeasurementResource#1-2; CSI-MeasurementResource corresponding to the CSI-ResourceConfig#2 is CSI-MeasurementResource#2-1, CSI-MeasurementResource#2-2, and CSI-MeasurementResource#2-3; and CSI-MeasurementResource corresponding to the CSI-ResourceConfig#3 is CSI-MeasurementResource#3-1. The terminal device determines, based on a carrier#1 field, a carrier#2 field, and a carrier#3 field, that carriers respectively associated with the CSI-ResourceConfig#1, the CSI-ResourceConfig#2, and the CSI-ResourceConfig#3 are a carrier #1, a carrier #2, and a carrier #3.

That the terminal device obtains the CSI based on the CSI-ResourceConfig#1, the CSI-ResourceConfig#2, and the CSI-ResourceConfig#3 includes: The terminal device performs channel measurement on the carrier #1 based on the CSI-MeasurementResource#1-1 and the CSI-MeasurementResource#1-2, performs channel measurement on the carrier #2 based on the CSI-MeasurementResource#2-1, the CSI-MeasurementResource#2-2, and the CSI-MeasurementResource#2-3, and performs channel measurement on the carrier #3 based on the CSI-MeasurementResource#3-1. Results of measuring the carrier #1, the carrier #2, and the carrier #3 by the terminal device may be carried in one piece of CSI.

It should be understood that, after the terminal device obtains the CSI, the terminal device sends the CSI to the network device. Correspondingly, the network device receives the CSI sent by the terminal device. For example, the terminal device determines the M CSI-MeasurementResource based on the N CSI-ResourceConfig. The terminal device obtains the CSI based on the m CSI-MeasurementResource in the M CSI-MeasurementResource, and sends the CSI to the network device.

It should be understood that the foregoing examples are merely examples of the method shown in FIG. 4, and do not impose any limitation on the method in FIG. 4.

It may be understood that FIG. 4 and the foregoing examples in embodiments of this application are merely intended to help a person skilled in the art understand embodiments of this application, but are not intended to limit embodiments of this application to specific scenarios in the examples. It is clear that a person skilled in the art may make various equivalent modifications or variations according to the method and the specific examples in FIG. 4 provided in this application. The modifications or the variations also fall with the scope of embodiments of this application.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that some message names such as first information are used in embodiments of this application. It should be understood that the names are not intended to limit the protection scope of embodiments of this application.

It may be further understood that in the foregoing method embodiments, the method and the operation implemented by the terminal device may alternatively be implemented by a component (for example, a chip or a circuit) of the terminal device. In addition, the method and the operation implemented by a network device may alternatively be implemented by a component (for example, a chip or a circuit) of the network device. This is not limited. In correspondence to the method provided in the foregoing method embodiments, an embodiment of this application further provides a corresponding apparatus. The apparatus includes a corresponding module configured to perform the foregoing method embodiments. The modules may be software, hardware, or a combination of software and hardware. It may be understood that the technical features described in the method embodiments are also applicable to the following apparatus embodiments.

It should be understood that the network device and the terminal device may perform some or all steps in the foregoing embodiments. These steps or operations are merely examples. In embodiments of this application, other operations or variations of various operations may be further performed. In addition, the steps may be performed in another sequence different from that presented in the foregoing embodiments, and not all the operations in the foregoing embodiments may be performed.

The foregoing describes in detail the resource configuration method provided in embodiments of this application with reference to FIG. 4. The following describes in detail a communication apparatus provided in embodiments of this application with reference to FIG. 5 to FIG. 7. It should be understood that descriptions of apparatus embodiments correspond to the descriptions of the method embodiments. Therefore, for content that is not described in detail, refer to the foregoing method embodiments. For brevity, details of a part of content are not described herein again.

FIG. 5 is a block diagram of a communication apparatus according to an embodiment of this application. The apparatus 500 includes a transceiver unit 510. The transceiver unit 510 may be configured to implement a corresponding communication function. The transceiver unit 510 may also be referred to as a communication interface or a communication unit.

Optionally, the apparatus 500 may further include a processing unit 520. The processing unit 520 may be configured to process data.

Optionally, the apparatus 500 further includes a storage unit. The storage unit may be configured to store instructions and/or data. The processing unit 520 may read the instructions and/or the data in the storage unit, so that the apparatus implements actions of different terminal devices in the foregoing method embodiments, for example, actions of the network device or the terminal device.

The apparatus 500 may be configured to perform the actions performed by the network device or the terminal device in the foregoing method embodiments. In this case, the apparatus 500 may be the network device or the terminal device, or may be a component of the network device or the terminal device. The transceiver unit 510 is configured to perform a receiving/sending-related operation of the network device or the terminal device in the foregoing method embodiments. The processing unit 620 is configured to perform a processing-related operation of the network device or the terminal device in the foregoing method embodiments.

It should be further understood that the apparatus 500 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 500 may be specifically the network device or the terminal device in the foregoing embodiments, and may be configured to perform procedures and/or steps corresponding to the network device or the terminal device in the foregoing method embodiments; or the apparatus 500 may be specifically the network device or the terminal device in the foregoing embodiments, and may be configured to perform procedures and/or steps corresponding to the network device or the terminal device in the foregoing method embodiments. To avoid repetition, details are not described herein again.

The apparatus 500 in the foregoing solutions has a function of implementing corresponding steps performed by the network device or the terminal device in the foregoing methods, or the apparatus 500 in the foregoing solutions has a function of implementing corresponding steps performed by the network device or the terminal device in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform receiving-sending operations and a related processing operation in the method embodiments.

In addition, the transceiver unit 510 may alternatively be a transceiver circuit (which, for example, may include a receiving circuit and a sending circuit), and the processing unit may be a processing circuit.

It should be noted that the apparatus in FIG. 5 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

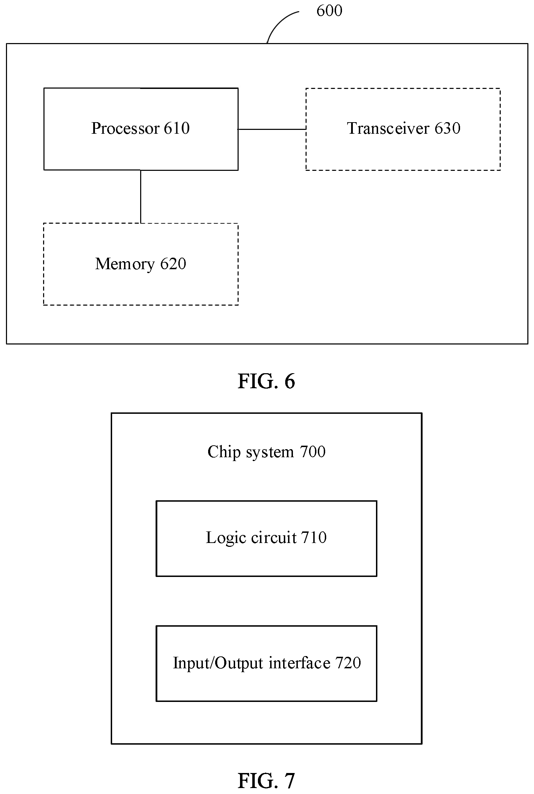

As shown in FIG. 6, an embodiment of this application provides another communication apparatus 600. The apparatus 600 includes a processor 610. The processor 610 is coupled to a memory 620. The memory 620 is configured to store a computer program or instructions and/or data. The processor 610 is configured to execute the computer program or the instructions stored in the memory 620, or read the data stored in the memory 620, to perform the methods in the foregoing method embodiments.

Optionally, there are one or more processors 610.

Optionally, there are one or more memories 620.

Optionally, the memory 620 and the processor 610 are integrated together, or are disposed separately.

Optionally, as shown in FIG. 6, the apparatus 600 further includes a transceiver 630. The transceiver 630 is configured to receive and/or send a signal. For example, the processor 610 is configured to control the transceiver 630 to receive and/or send the signal.

In a solution, the apparatus 600 is configured to implement operations performed by the network device or the terminal device in the foregoing method embodiments.

For example, the processor 610 is configured to execute the computer program or the instructions stored in the memory 620, to implement related operations of the terminal device in the foregoing method embodiments, for example, the terminal device in any one of the embodiments shown in FIG. 4, or the method of the terminal device in any one of the embodiments shown in FIG. 4.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

As shown in FIG. 7, an embodiment of this application provides a chip system 700. The chip system 700 (or may be referred to as a processing system) includes a logic circuit 710 and an input/output interface (input/output interface) 720.

The logic circuit 710 may be a processing circuit in the chip system 700. The logic circuit 710 may be coupled to and connected to a storage unit, and invoke instructions in the storage unit, to enable the chip system 700 to implement the methods and functions in embodiments of this application. The input/output interface 720 may be an input/output circuit in the chip system 700, and outputs information processed by the chip system 700, or inputs to-be-processed data or signaling information into the chip system 700 for processing.

In a solution, the chip system 700 is configured to implement operations performed by the network device or the terminal device in the foregoing method embodiments.

For example, the logic circuit 710 is configured to implement processing related operations performed by the terminal device in the foregoing method embodiments, for example, a processing-related operation performed by the terminal device in the embodiment shown in FIG. 4. The input/output interface 720 is configured to implement sending and/or receiving-related operations performed by the terminal device in the foregoing method embodiments, for example, a sending and/or receiving-related operation performed by the terminal device in the embodiment shown in FIG. 4.

An embodiment of this application further provides a computer-readable storage medium. The computer-readable storage medium stores computer instructions used to implement the method performed by the network device or the terminal device in the foregoing method embodiments.

For example, when a computer program is executed by a computer, the computer is caused to implement the method performed by the network device or the terminal device in the foregoing method embodiments.

An embodiment of this application further provides a computer program product, including instructions. The instructions are executed by a computer to implement the method performed by the network device or the terminal device in the foregoing method embodiments.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

## Claims

1. A resource configuration method, applied to a first communication apparatus, and comprising:
receiving a channel state information CSI reporting configuration from a network device, wherein the CSI reporting configuration comprises N fields, the N fields are in one-to-one correspondence with N CSI resource configurations, a first field in the N fields indicates a first carrier associated with a first CSI resource configuration that is in the N CSI resource configurations and that corresponds to the first field, the N CSI resource configurations are associated with N carriers, and N is a positive integer greater than 1;
obtaining CSI based on the CSI reporting configuration; and
sending the CSI to the network device.

2. The method according to claim 1, wherein that the CSI reporting configuration comprises the N fields comprises:
the CSI reporting configuration further comprises N CSI reporting sub-configurations, the N CSI reporting sub-configurations comprise the N fields, and the N fields are in one-to-one correspondence with the N CSI reporting sub-configurations.

3. The method according to claim 1, wherein the CSI reporting configuration comprises at least one CSI measurement resource group, the at least one CSI measurement resource group comprises M CSI measurement resources, the M CSI measurement resources correspond to the N CSI resource configurations, and M is a positive integer greater than or equal to N; and
the obtaining the CSI based on the CSI reporting configuration comprises:
determining, based on the at least one CSI measurement resource group, the M CSI measurement resources corresponding to the N CSI resource configurations; and
obtaining the CSI based on the M CSI measurement resources.

4. The method according to claim 2, wherein the CSI reporting configuration comprises the N CSI reporting sub-configurations, and the N CSI reporting sub-configurations are in one-to-one correspondence with the N CSI resource configurations; and
the obtaining the channel state information CSI based on the CSI reporting configuration comprises:
determining the N CSI resource configurations based on the N CSI reporting sub-configurations; and
obtaining the CSI based on the N CSI resource configurations.

5. The method according to any one of claims 1 to 4, wherein the obtaining the CSI based on the CSI reporting configuration comprises:
obtaining the CSI based on the M CSI measurement resources, wherein an interval between the M CSI measurement resources on a time domain resource is less than or equal to a first threshold, and the first threshold is a positive integer, wherein
the M CSI measurement resources are associated with the N CSI resource configurations, and M is a positive integer greater than or equal to N.

6. The method according to any one of claims 1 to 5, wherein before the receiving the CSI reporting configuration from the network device, the method further comprises:
sending joint channel measurement capability information to the network device, wherein the joint channel measurement capability information is used by the network device to determine the CSI reporting configuration, and
the joint channel measurement capability information comprises one or more of the following:
a maximum value of a quantity of carriers that is supported for joint channel measurement, information about a band combination supported by the terminal device for joint channel measurement, a maximum total bandwidth supported by the terminal device for joint channel measurement, and a maximum quantity of ports that is supported by the terminal device for joint channel measurement.

7. The method according to any one of claims 1 to 6, wherein the obtaining the CSI based on the CSI reporting configuration comprises:
determining, based on first signaling, a sub-band granularity for channel measurement, wherein the first signaling indicates the terminal device to determine, based on a total bandwidth of the N carriers, the sub-band granularity for channel measurement; and
obtaining the CSI based on the sub-band granularity and the N CSI resource configurations.

8. A resource configuration method, applied to a second communication apparatus, and comprising:
sending a channel state information CSI reporting configuration to a terminal device, wherein the CSI reporting configuration comprises N fields, the N fields are in one-to-one correspondence with N CSI resource configurations, a first field in the N fields indicates a first carrier associated with a first CSI resource configuration that is in the N CSI resource configurations and that corresponds to the first field, the N CSI resource configurations are associated with N carriers, and N is a positive integer greater than 1; and
receiving CSI from the terminal device, wherein the CSI is obtained based on the CSI reporting configuration.

9. The method according to claim 8, wherein that the CSI reporting configuration comprises the N fields comprises:
the CSI reporting configuration comprises N CSI reporting sub-configurations, the N CSI reporting sub-configurations comprise the N fields, and the N fields are in one-to-one correspondence with the N CSI reporting sub-configurations.

10. The method according to claim 8, wherein the CSI reporting configuration comprises at least one CSI measurement resource group, the at least one CSI measurement resource group comprises M CSI measurement resources, the M CSI measurement resources correspond to the N CSI resource configurations, and M is a positive integer greater than or equal to N; and
that the CSI is obtained based on the CSI reporting configuration comprises:
the CSI is obtained based on the M CSI measurement resources, the M CSI measurement resources correspond to the N CSI resource configurations, and the N CSI resource configurations are determined based on the at least one CSI measurement resource group.

11. The method according to claim 9, wherein the CSI reporting configuration comprises the N CSI reporting sub-configurations, and the N CSI reporting sub-configurations are in one-to-one correspondence with the N CSI resource configurations; and
that the CSI is obtained based on the CSI reporting configuration comprises:
the CSI is obtained based on the N CSI resource configurations, and the N CSI resource configurations are determined based on the N CSI reporting sub-configurations.

12. The method according to any one of claims 8 to 11, wherein that the CSI is obtained based on the CSI reporting configuration comprises:
the CSI is obtained based on the M CSI measurement resources, wherein an interval between the M CSI measurement resources on a time domain resource is less than or equal to a first threshold, and the first threshold is a positive integer, wherein
the M CSI measurement resources are associated with the N CSI resource configurations, and M is a positive integer greater than or equal to N.

13. The method according to any one of claims 8 to 12, wherein before the sending the CSI reporting configuration to the terminal device, the method further comprises:
receiving joint channel measurement capability information from the terminal device, wherein the joint channel measurement capability information is used to determine the CSI reporting configuration, and
the joint channel measurement capability information comprises one or more of the following:
a maximum value of a quantity of carriers that is supported by the terminal device for joint channel measurement, information about a band combination supported by the terminal device for joint channel measurement, a maximum total bandwidth supported by the terminal device for joint channel measurement, and a maximum quantity of ports that is supported by the terminal device for joint channel measurement.

14. The method according to any one of claims 8 to 13, wherein the method further comprises:
sending first signaling to the terminal device, wherein the first signaling indicates the terminal device to determine, based on a total bandwidth of the N carriers, a sub-band granularity for channel measurement, wherein
the CSI is obtained based on the sub-band granularity and the N CSI resource configurations.

15. A communication apparatus, comprising:
a transceiver unit, configured to receive a channel state information CSI reporting configuration from a network device, wherein the CSI reporting configuration comprises N fields, the N fields are in one-to-one correspondence with N CSI resource configurations, a first field in the N fields indicates a first carrier associated with a first CSI resource configuration corresponding to the first field, the N CSI resource configurations are associated with N carriers, and N is a positive integer greater than 1; and
a processing unit, configured to obtain CSI based on the N CSI resource configurations, wherein
the transceiver unit is further configured to send the CSI to the network device.

16. The apparatus according to claim 15, wherein the CSI reporting configuration comprises N CSI reporting sub-configurations, the N CSI reporting sub-configurations comprise the N fields, and the N fields are in one-to-one correspondence with the N CSI reporting sub-configurations.

17. The apparatus according to claim 15, wherein the CSI reporting configuration comprises at least one CSI measurement resource group, the at least one CSI measurement resource group comprises M CSI measurement resources, the M CSI measurement resources correspond to the N CSI resource configurations, and M is a positive integer greater than or equal to N;
the processing unit is further configured to determine, based on the at least one CSI measurement resource group, the M CSI measurement resources corresponding to the N CSI resource configurations; and
the processing unit is further configured to obtain the CSI based on the M CSI measurement resources.

18. The apparatus according to claim 16, wherein the CSI reporting configuration comprises the N CSI reporting sub-configurations, and the N CSI reporting sub-configurations are in one-to-one correspondence with the N CSI resource configurations;
the processing unit is further configured to determine the N CSI resource configurations based on the N CSI reporting sub-configurations; and
the processing unit is further configured to obtain the CSI based on the N CSI resource configurations.

19. The apparatus according to any one of claims 15 to 18, wherein
the processing unit is further configured to obtain the CSI based on M CSI measurement resources, wherein an interval between the M CSI measurement resources on a time domain resource is less than or equal to a first threshold, and the first threshold is a positive integer, wherein
the M CSI measurement resources are associated with the N CSI resource configurations, and M is a positive integer greater than or equal to N.

20. The apparatus according to any one of claims 15 to 19, wherein before the transceiver unit is configured to receive the CSI reporting configuration from the network device,
the transceiver unit is further configured to send joint channel measurement capability information to the network device, wherein the joint channel measurement capability information is used by the network device to determine the CSI reporting configuration, and
the joint channel measurement capability information comprises one or more of the following:
a maximum value of a quantity of carriers that is supported by the terminal device for joint channel measurement, information about a band combination supported by the terminal device for joint channel measurement, a maximum total bandwidth supported by the terminal device for joint channel measurement, and a maximum quantity of ports that is supported by the terminal device for joint channel measurement.

21. The apparatus according to any one of claims 15 to 20, wherein
the processing unit is further configured to determine, based on first signaling, a sub-band granularity for channel measurement, wherein the first signaling indicates the terminal device to determine, based on a total bandwidth of the N carriers, the sub-band granularity for channel measurement; and
the processing unit is further configured to obtain the CSI based on the sub-band granularity and the N CSI resource configurations.

22. A resource configuration apparatus, comprising:
a processing unit, configured to determine a channel state information CSI reporting configuration; and
a transceiver unit, configured to send the CSI reporting configuration to a terminal device, wherein the CSI reporting configuration comprises N fields, the N fields are in one-to-one correspondence with N CSI resource configurations, a first field in the N fields indicates a first carrier associated with a first CSI resource configuration that is in the N CSI resource configurations and that corresponds to the first field, the N CSI resource configurations are associated with N carriers, and N is a positive integer greater than 1, wherein
the transceiver unit is further configured to receive CSI from the terminal device, wherein the CSI is obtained based on the CSI reporting configuration.

23. The apparatus according to claim 22, wherein that the CSI reporting configuration comprises the N fields comprises:
the CSI reporting configuration comprises N CSI reporting sub-configurations, the N CSI reporting sub-configurations comprise the N fields, and the N fields are in one-to-one correspondence with the N CSI reporting sub-configurations.

24. The apparatus according to claim 22, wherein the CSI reporting configuration comprises at least one CSI measurement resource group, the at least one CSI measurement resource group comprises M CSI measurement resources, the M CSI measurement resources correspond to the N CSI resource configurations, and M is a positive integer greater than or equal to N; and
the CSI is obtained based on the M CSI measurement resources, the M CSI measurement resources correspond to the N CSI resource configurations, and the N CSI resource configurations are determined based on the at least one CSI measurement resource group.

25. The apparatus according to claim 23, wherein the CSI reporting configuration comprises the N CSI reporting sub-configurations, and the N CSI reporting sub-configurations are in one-to-one correspondence with the N CSI resource configurations; and
the CSI is obtained based on the N CSI resource configurations, and the N CSI resource configurations are determined based on the N CSI reporting sub-configurations.

26. The apparatus according to any one of claims 22 to 25, wherein the CSI is obtained based on the M CSI measurement resources, wherein an interval between the M CSI measurement resources on a time domain resource is less than or equal to a first threshold, and the first threshold is a positive integer, wherein
the M CSI measurement resources are associated with the N CSI resource configurations, and M is a positive integer greater than or equal to N.

27. The apparatus according to any one of claims 22 to 26, wherein before the transceiver unit is configured to send the CSI reporting configuration to the terminal device, the transceiver unit is further configured to receive joint channel measurement capability information from the terminal device, wherein the joint channel measurement capability information is used to determine the CSI reporting configuration, and
the joint channel measurement capability information comprises one or more of the following:
a maximum value of a quantity of carriers that is supported by the terminal device for joint channel measurement, information about a band combination supported by the terminal device for joint channel measurement, a maximum total bandwidth supported by the terminal device for joint channel measurement, and a maximum quantity of ports that is supported by the terminal device for joint channel measurement.

28. The apparatus according to any one of claims 22 to 27, wherein the transceiver unit is further configured to send first signaling to the terminal device, wherein the first signaling indicates the terminal device to determine, based on a total bandwidth of the N carriers, a sub-band granularity for channel measurement, wherein
the CSI is obtained based on the sub-band granularity and the N CSI resource configurations.

29. A communication apparatus, comprising:
a processor, configured to execute a computer program, to cause the communication apparatus to perform the method according to any one of claims 1 to 7, or to cause the communication apparatus to perform the method according to any one of claims 8 to 14.

30. The apparatus according to claim 29, wherein the communication apparatus further comprises a memory, the memory is coupled to the processor, and the memory stores the computer program.

31. A computer-readable storage medium, wherein the computer-readable storage medium stores a computer program, and when the computer program is run on a computer, the computer is caused to perform the method according to any one of claims 1 to 7, or the computer is caused to perform the method according to any one of claims 8 to 14.

32. A computer program product, wherein the computer program product comprises a computer program or instructions used to perform the method according to any one of claims 1 to 7, or a computer program or instructions used to perform the method according to any one of claims 8 to 14.
